# EUROPEAN PATENT APPLICATION

(11) **EP 3 981 667 A1**
(43) Date of publication of application: **13.04.2022**
(21) Application number: 21201040.9
(22) Date of filing: 05.10.2021
(51) Int. Cl.: B62B 3/02, A47F 7/24, B65D 85/18, F16B 7/04, E05D 5/14, A47B 61/02, A47G 25/06

(54) **ROLL CONTAINER WITH ADJUSTABLE AND COLLAPSIBLE PARTS**

(30) Priority: 07.10.2020 NL 2026636; 22.02.2021 NL 2027609
(71) Applicant: VRC S. van der Veen Rol-Containers B.V., 7601 PT Almelo (NL)
(72) Inventor: VAN DER VEEN, Sander, 7601 PT ALMELO (NL)
(74) Representative: EP&C

(57) **Abstract**

The invention pertains to a roll container (200) comprising a panel (201, 202), a top frame (9), and a connector (600) for rotatably connecting the top frame (9) to the panel (201, 202). The connector (600) is adapted to allow rotation of the top frame (9) between a first rotational position and a second rotational position. The top frame (9) extends further in a vertical direction in the second rotational position than in the first rotational position. The connector (600) is mounted to the panel (201, 202). The connector (600) optionally comprises a plastic material.

## Description

The invention relates to the technical field of transport trolleys, in particular roll containers for the collection and transportation of divergent products, e.g. clothing or laundry. More specifically, the invention relates to a connector for a roll container and to a roll container which is convertible from a first configuration to a second configuration. The invention further relates to improvements to roll containers enabling a more flexible and versatile use of such containers.

Roll containers are commonly used for the storage and transport of goods. Conventional roll containers are constructed of metal frame sections. A typical roll container has a rectangular base plate with underneath four wheels. At each corner of the base plate a wheel is mounted. Often, the base plate is made from a metal, e.g. iron or steel, however other materials can be used as well, like for example plastics. Also, at least two opposite vertical metal panels are mounted to the sides of the metal base plate. The space inside the roll container to store goods is defined by the base plate and the panels. For example, goods can be placed on the base plate. The amount of metal panels depends on the particular needs. In the case, only two vertical metal panels are mounted, they are parallel to each other. In between the metal panels, metallic shelves at different levels in the roll container can be mounted. Each shelve forms a horizontal plane on which goods can be placed at a distance above the base plate. Optionally, the metal panels are removable from the metal base plate, e.g. for maintenance. During transport, these metal compartments (base plate, panels and shelves) are in contact with each other, resulting in rattle and noise. This noise is a common problem, which is experienced as annoying, for instance in hospitals.

Further, nowadays the storage and transportation of goods are very popular and widely used, for example in deliveries of parcels. Associated with it, is the need for an efficient storage and transportation. A conventional container is arranged in a configuration to store as much of a type of good as possible. The more a conventional container can store of a type of good, the more cost-effective the roll container is.

The problem with the conventional roll container is if another type of good is to be transported, the roll container can store that other type of good very inefficient. The other type of good is difficult to load and unload, or there is a lot of empty space remaining after loading the roll container. Having a dedicated roll container for every type of good, on the other hand, poses a logistical difficulty. Having many roll containers is expensive and requires a lot of space to store the roll containers.

Hence, the restricted functionality of a conventional roll container reduces the amount of storage and increases the cost to transport different types of goods.

The invention aims to provide a solution to mitigate one or more of the issues above, or at least to provide an alternative for the existing devices.

According to a first aspect of the invention, there is provided a roll container comprising a first beam, a body and a connector for connecting the first beam and the body to each other, wherein the connector comprises:
- a first portion, and
- a second portion;
wherein the first portion and the second portion together form
- a first enclosure for enclosing a lateral surface of the first beam, and
- a second enclosure for at least partly enclosing the body;
wherein the first enclosure and the second enclosure are spaced apart from each other.

A roll container comprises four wheels, mounted near the corners at the bottom of a rectangular base plate, and vertical panels. In an example, the roll container has less than four wheels, e.g., three wheels. In another example, the roll container has more than four wheels, e.g., six or eight wheels. The wheels of the roll container have a plastic tread, e.g. polypropylene. Both the panels and the base plate are made from a metal framework. However, the base plate can alternatively be made from a plastic material or wood. The panels are electrolytic galvanized to prevent rust. The panel may be a framework of spaced bars or beams that are parallel to or cross each other.

The space inside the roll container to store goods is defined by the base plate and the panels. For example, goods can be placed on the base plate. In between the panels, shelves at different levels in the roll container can be mounted. Each shelve forms a horizontal plane on which goods can be placed at a distance above the base plate.

In the roll container according to the invention a first beam and a body are connected to each other by a connector. The first beam of the roll container may be a straight bar, which may be a part of the vertical panels or a shelf. In an example, the first beam is located at the end of a metallic grating structure. A beam of the roll container is for example made from metal, e.g. iron or steel. The body of the roll container may be a mounting part, wherein the body is connected to a second beam of the roll container. In another embodiment, the body may be a third beam of the roll container, which may be a part of a particular panel or shelf.

The connector is a connecting piece, which connector is adapted to connect the first beam and the body to each other. The connector comprises a first portion and a second portion. The first portion and the second portion together form a first enclosure and a second enclosure, respectively. The first enclosure is adapted to enclose a lateral surface of the first beam. If the first beam has a cylindrical shape, the lateral surface is e.g. the circumference of the first beam. The second enclosure is adapted to enclose at least partially the body. In an embodiment, the second enclosure has a recess when the body is partially enclosed. The recess provides extra freedom of movement for the body inside the second enclosure.

In another embodiment, the connector fixes the circumference of the body. In the connector, the first enclosure and the second enclosure are spaced apart from each other. This results in a spacing between the first beam and the body, wherein direct contact between the first beam and the body is avoided. During transportation, the spacing is advantageous to mitigate the noise between the different parts of the roll container, i.e., between the first beam and the body. Also, during transportation the connected parts of the roll container by the connector are held in a desired position, e.g. horizontally or vertically.

In an embodiment, the first portion and the second portion are moveable relative to each other between a closed state and an open state. The first portion has a first contact area, and the second portion has a second contact area. In the open state, the first contact area and the second contact area are at a distance from each other to provide a passage for the first beam to enter the first enclosure. The width of the passage has to be sufficient enough to engage the shape of the first beam inside the first enclosure. Also, in the open state the connector has to provide a second passage for the body to enter the second enclosure. In an embodiment, the body is connected to a second beam of the roll container. In another embodiment, the body is a third beam of the roll container. Likewise for the first enclosure, the second enclosure encloses a second lateral surface of the third beam.

In the closed state, the first contact area and the second contact area are in contact with each other to close the passage. In the closed state, the first beam is fixed inside the first enclosure formed by the first portion and the second portion of the connector. Preferably, the first portion and the second portion are parallel to each other in the closed state. As a consequence, the body is parallel to the first beam.

In an embodiment, the body is removable from the second enclosure via the second passage in the closed state. The body may be removable from one plane, for example an open plane, of the second enclosure, wherein the other planes of the second enclosure hold the body. For example, the body may be a disc, wherein the connector serves as a suspension for a particular part of the roll container, e.g. a shelf or a frame. Along the open plane, the body can be removed or lifted from the second enclosure. By removing the body from the second enclosure in the closed state, e.g. the shelf can be lifted from its suspension. For example, the connector can be used as a door lock, wherein the door comprises the body. The door is e.g. the frame of the roll container. By inserting the body into the second enclosure of the connector, the door is locked in the connector.

In a further embodiment, the connector comprises an aperture to connect the connector to the first beam of the roll container. Preferably, the connection is made by a bolt. In an embodiment, the first beam comprises an associated aperture. The associated aperture matches the aperture of the connector, when the connector encloses the first beam. In this manner, the connection can e.g. be made by a bolt.

In a further embodiment, the first portion and the second portion are connectable. For example, the first portion and the second portion may have local grooves and/or protrusions at predetermined locations at the first area and the second area, respectively. When the first portion and the second portion are brought in the closed state, they are connected by the local grooves and/or protrusions. This integration mechanism of the protrusions inside the local grooves can be regarded as a click system.

In another embodiment, the first portion and the second portion are a single-body construction. In other words, the first portion and the second portion are part of one piece, i.e. the connector. The first portion and the second portion are connected by a hinge. The hinge allows the transition between the open state and the closed state of the connector. The hinge allows the first portion and the second portion to pivot relative to each other. Preferably, the connector is made from a plastic material, more preferably ABS. For example, the connector is produced by injection molding.

In a further embodiment, the first beam is part of a first panel of the roll container. A panel of the roll container may be a fence mounted at a side edge of the base plate. Typically, the roll container comprises two opposite side panels and a back panel. The back panel is perpendicular to each side panel. The side panels and the back panel are perpendicular to the base plate, i.e., in a vertical direction. The first beam of the first panel may e.g. be a bar which is located horizontally along the first panel. For example, when the panel is a framework of spaced bars, the connector is adapted to enclose the first beam inside the first enclosure between the spaced bars.

Further, the body may be connected to a second panel of the roll container. In another embodiment, the body is a beam of the second panel. Similarly, the connector is adapted to enclose the body inside the second enclosure. In the closed state, the connector forms a hinge for rotating the first panel relative to the second panel. For example, the hinge is formed by the second enclosure that is configured to allow a rotation of the body inside the second enclosure. The connector is fixed to the first panel via the first enclosure. So when the body rotates inside the second enclosure, the first panel and the second panel rotate relative to each other.

In an embodiment, the connector sticks out the roll container. The connector extends, for example, outward from a panel. So when the roll container collides against an object or structure, e.g. a wall, contact is made with the connector. For example, the connector has soft material properties, like for instance ABS. The connector will absorb most of the impact of the collision, such that damage to the surroundings (e.g. the wall) or the roll container is reduced.

According to a second aspect of the invention, a roll container is provided. The roll container is adapted to be converted from a first configuration to a second configuration. The roll container comprises a shelf, a first panel and a frame. The shelf is connected to the frame. In the first configuration:
- the shelf is adapted to be mounted horizontally, perpendicular to the first panel and to the frame, and
the shelf is adapted to be pivoted from the first configuration to the second configuration. In the second configuration:
- the shelf is in a vertical position and parallel to the frame, and
- the shelf is adapted to be pivoted together with the frame.

The roll container comprises a first panel, which first panel is mounted vertically to an edge of the base plate. Underneath the base plate, wheels are attached to move the roll container. The first panel is for example constructed as a metallic grating structure or a fence. The first panel partly defines a space in the roll container to store goods. Further, the roll container according to the invention comprises a shelf. The shelf is removable from the roll container, e.g. for maintenance.

In a first configuration according to the invention, the shelf is adapted to be mounted horizontally and perpendicular to the first panel. Goods can be placed on the shelf, when the shelf is in the horizontal position. The first panel constrains the goods to the shelf, by providing a barrier at at least one edge of the shelf. The shelf is connected to the frame. For example, the shelf comprises a first beam, wherein the first beam is connected to the frame. The shelf is adapted to be pivoted from the first configuration to the second configuration. In the second configuration, the shelf is in a vertical position and parallel to the frame. In addition, the shelf is adapted to be pivoted together with the frame, when the shelf is parallel to the frame. Optionally, the frame has equal dimensions compared to the shelf or the shelf is slightly smaller than the frame. In the second configuration, the shelf and the frame may be rotatable around a vertical axis, wherein the frame is hinged to the first panel. However, other ways of rotation are possible. For example, the shelf and the frame may be rotatable around a horizontal axis, wherein the frame is hinged to the base plate. In this situation, the frame can be suspended to the first panel and/or a second panel of the roll container. When the frame and the shelf are rotated around the horizontal axis to create an open space in the roll container to store goods, the frame and the shelf could serve as ramp. This facilitates the loading or unloading of heavy goods inside the roll container.

In an embodiment, the shelf is suspended with suspension means at a second panel of the roll container. The suspension means are mounted at an opposite side of the shelf relative to the first beam of the shelf. To pivot the shelf from the first configuration to the second configuration, first the suspension means at the opposite side are pulled out or lifted from the suspension at the second panel. This may be accomplished by lifting the shelf at one side, e.g. at the opposite side of the shelf relative to the first beam of the shelf. Subsequently, the shelf can be rotated around its first beam.

In a further embodiment, the roll container further comprises a mountable bar. The mountable bar is connected by a connecting member in the first configuration. Preferably, the mountable bar is oriented in the vertical direction in the first configuration. The connecting member may be located at an edge of the base plate, preferably at the centre of the bottom side of a side panel. For example, the connecting member comprises a cavity, wherein the mountable bar can be inserted.

The mountable bar is adapted to be mounted horizontally inside the roll container in the second configuration. In this manner, the mountable bar is adapted to hang up clothing or other products. To convert the roll container from the first configuration to the second configuration, the mountable bar is removed from the connecting member. Thereafter, the mountable bar can be placed horizontally between two opposite panels of the roll container.

The roll container according to the invention has an improved functionality. With one roll container according to the invention, it is possible to easily switch between shelves for storing goods and horizontal bars to hang up clothing or other products. With one roll container, multiple types of goods or product can be stored and transported. This improved functionality results in further advantages, like reduction of costs and improved transportation of goods or products.

In a further embodiment, the roll container according to the invention further comprises at least one connector for connecting the first beam and the frame to each other. The at least connector comprises a first portion and a second portion. The first portion and the second portion together form a first enclosure and a second enclosure. The first enclosure encloses a lateral surface of the frame. The second enclosure encloses at least partly the first beam. The first enclosure and the second enclosure are spaced apart from each other.

The second enclosure may comprise a recess to hinge the first beam, when the roll container is converted from the first configuration to the second configuration. The recess allows a limited displacement of the first beam inside the second enclosure.

In a further embodiment, the first portion and the second portion have a first contact area and a second contact area, respectively. The first portion and the second portion are movable relative to each other between a closed state and an open state. In the open state, the first contact area and the second contact area are at a distance from each other. Moreover, a passage is provided for the lateral surface of the frame to enter the first enclosure.

When the first portion and the second portion are moved towards the closed state, the first contact area and the second contact area are approaching each other. In the closed state, the first portion and the second portion are in contact with each other. The passage is closed in the closed state.

In a further embodiment, the second enclosure is adapted to provide a second passage for the first beam. The second passage is provided to enclose a second lateral surface of the first beam. If the first beam has a cylindrical shape, the second lateral surface is e.g. the circumference of the first beam.

In a further embodiment, the connector further comprises an aperture to connect the connector to the frame of the roll container. Preferably, the connection is made by a bolt. In an embodiment, the frame comprises an associated aperture. The associated aperture matches the aperture of the connector, when the connector encloses the frame. In this manner, the connection can e.g. be made by a bolt.

In a further embodiment, the first portion and the second portion are connectable. For example, the first portion and the second portion may have local grooves and/or protrusions at predetermined locations at the first area and the second area, respectively. When the first portion and the second portion are brought in the closed state, they are connected by the local grooves and/or protrusions. This integration mechanism of the protrusions inside the local grooves can be regarded as a click system.

In another embodiment, the first portion and the second portion are a single-body construction. In other words, the first portion and the second portion are part of one piece, i.e. the connector. The first portion and the second portion are connected by a hinge. The hinge allows the transition between the open state and the closed state of the connector. The hinge allows the first portion and the second portion to pivot relative to each other. Preferably, the connector is made from a plastic material, more preferably ABS. For example, the connector is produced by injection molding.

In a further embodiment, the shelf in the second configuration is adapted to be pivoted together with the frame around a vertical axis. For example, the vertical axis is a vertical bar of the side panel. However, other ways of rotation of the shelf together with the frame are possible.

For example, the shelf and the frame may be rotatable around a horizontal axis, wherein the frame is hinged to the base plate. In this situation, the frame can be suspended to the first panel and/or a second panel of the roll container. When the frame and the shelf are rotated around the horizontal axis to create an open space in the roll container to store goods, the frame and the shelf could serve as ramp. This facilitates the loading or unloading of heavy goods inside the roll container.

Optionally, the frame has equal dimensions compared to the shelf or the shelf is slightly smaller than the frame.

In a further or alternative embodiment, the shelf comprises at least two segments. Each segment comprises a first beam part. Each segment is adapted to be pivoted from a horizontal position to a vertical position.

In the horizontal position, the first beam part is connected to the frame. In the vertical position, the segment is parallel to the frame. Further, the segment is adapted to be pivoted together with the frame.

For example, in an embodiment the shelf comprises two segments, a first segment and a second segment. The first segment is pivoted from the horizontal position to a vertical position, leaving an empty space next to the second segment. The second segment is in the horizontal position. In this configuration, it is possible to place goods on the second segment of the shelf, whereas for example large or vertical objects can be stored next to the second segment of the shelf. In this way, different types of goods can be stored in the roll container according to the invention, which improves the functionality and efficiency.

In a further embodiment, the roll container further comprises a top frame. The top frame comprises a top bar. The top bar is connected perpendicularly to the top of the first panel. The top bar is adapted to be pivoted from a low position to a high position. In the low position, the height of the roll container is minimal. Hence, less space is required to store the roll container.

When the top bar is in the high position, goods can be hanged vertically at the top bar. In an embodiment, the top bar is in the high position and the mountable bar is mounted horizontally inside the roll container. This configuration of the roll container enables the twofold vertical storage of e.g. clothing. The goods hanged from the top bar are held high enough above the goods hanged from the mountable bar, so the goods hanged from the top bar do not touch the goods hanged from the mountable bar. This helps, for example, to reduce wrinkling of the clothing hanged from the top bar. Without the top frame, the goods hanged from the top bar would touch the goods hanged from the mountable bar.

According to a third aspect of the invention, a roll container is provided, the roll container comprising a modular guiding system. In particular, a roll container comprising a first panel, a second panel arranged substantially parallel to the first panel, and a modular guide system, the modular guide system comprising:
- a first guide assembly comprising a first guiding element and a second guiding element, the first guiding element and the second guiding element being mounted to the first panel of the roll container,
- a second guide assembly comprising a third guiding element and a fourth guiding element, the third guiding element and the fourth guiding element being configured to be mounted to the second panel of the roll container,
whereby each of the first, second, third and fourth guiding element comprises:
∘ a cavity for receiving an end portion of a mounting bar, the cavity having an opening that is configured to enable the end portion to enter the cavity and is configured to guide the end portion to a secured position in the cavity, and
whereby the first, second, third and fourth guiding elements are made from plastic.

The roll container according to the third aspect of the invention comprises a modular guide system which can be used for the mounting of a mounting bar, e.g. a bar or rod onto which clothes or other items can be hang. In accordance with the third aspect of the invention, the roll container comprises modular guiding system comprising a first guiding assembly and a second guiding assembly. Each guiding assembly comprises a pair of guiding elements. Each pair of guiding elements is mounted to a panel of the roll container.

The guiding elements are provided with cavities into which an end portion of a mounting bar can be arranged. As will be explained below, the cavities are provided with an opening via which an end portion of the mounting bar can be inserted in the cavity and which is configured to guide the end portion to a secured position in the cavity.

Assuming a mounting bar having a length substantially corresponding to the distance between the first and second panel, the mounting bar can either be secured by the first and third guiding element or by the second and fourth guiding element.

In accordance with the invention, the guiding elements are made from plastic. By doing so, a reconfiguration of the roll container, whereby the mounting bar is transferred from one mounting position to another, can be performed less noisy, compared to known arrangements whereby bars or rods are mounted or guided using metal components.

In a fourth aspect of the invention, there is provided a roll container comprising a panel, a top frame, and a connector for rotatably connecting the top frame to the panel. The connector is adapted to allow rotation of the top frame between a first rotational position and a second rotational position. The top frame extends further in a vertical direction in the second rotational position than in the first rotational position. The connector is mounted to the panel. The connector optionally comprises a plastic material.

According to the fourth aspect of the invention, the rotation of the top frame from the first rotational direction to the second rotational position allows to increase the height of the roll container when desired. In case the roll container is not used, or if goods are stacked on the base plate of the roll container, the top frame is in the first rotational position. In the first rotational position, the roll container has a limited height, which allows for more easy storage of the roll container and for more easy transport of the roll container. In the second position, the top frame extends the height of the roll container and provides an additional frame to carry goods. For example, the top frame may be used to carry hanging goods such as clothing. Because of the extended height in the second rotational position, the roll container is able to carry longer hanging goods, such as doctor's white coats, while ensuring also the bottom parts of the hanging goods hangs. Because of the extended height in the second rotational position, the roll container is able to carry hanging goods hanging from the top frame, and to carry additional goods beneath the hanging goods without the additional goods contacting the hanging goods. In case the connector is damaged, the connector can simply be replaced by another connector. The damaged connector is dismounted from the panel, and the new connector is mounted to the panel. The plastic material in the connector reduces or even eliminates rattling noise caused by the top frame. When moving the roll container, the top frame may have some play relative to the connector. This play is helpful to rotate the top frame easily between the first rotational position and the second rotational position. However, the play may cause the top frame to vibrate while the roll container is being moved. Because of the plastic material in the connector, the vibrations of the top frame cause only a limited amount of noise or no noise at all.

The top frame is, for example, a U-shaped frame extending over a majority of the width of the roll container. The top frame comprises, for example, one or more bars or rods. The top frame is, for example, arranged asymmetrically relative to a rotation axis about which the top frame is able to rotate relative to the panel.

The top frame is able to rotate relative to the panel, for example, by manually rotating the top frame. For example, by pushing the top frame upward, the top frame is rotated from the first rotational position to the second rotational position. By pushing the top frame upward, the rotation relative to the panel causes the top frame to not only move upward, but also sideways, i.e., in a horizontal direction.

When describing the invention in this aspect or in any one of the other aspects, directions indicated with vertical and horizontal refer to an orientation in which the roll container is to be used. This means that the roll container is standing on its wheels with the base plate arranged at least substantially horizontal. The panels extend at least substantially vertical from the base plate.

The plastic material is suitable type of plastic material that is durable enough to endure repeated rotation of the top frame between the first rotational position and the second rotational position. An example of such plastic material is ABS.

In an embodiment, the top frame comprises a top portion and a side portion. The connector is adapted to allow rotation of the top frame about a rotation axis perpendicular to the panel. The side portion extends in a longitudinal direction parallel to the panel and holds the top portion at an offset from the axis. The top portion extends in a longitudinal direction perpendicular to the panel. The side portion is connected to the connector. The top portion is at a higher vertical position in the second rotational position than in the first rotational position.

It is preferred that, in the second rotational position, the top portion is above a center of the base plate or above a location near the center of the base plate. This allows the top portion to carry wide goods without the goods extending sideways from the roll container and/or without the goods contacting a panel, such as the back panel. It is preferred that, in the first rotational position, the top portion is near or at an edge of the roll container. If the top portion would be near the center of the base plate, the limited vertical position of the top portion in the first position would interfere with storing goods on the roll container. In this embodiment, the side portion is connected to the connector. When the side portion rotates relative to the panel via the connector, the offset between the rotation axis and the top portion causes the top portion to move both horizontally and vertically when moving between the first rotational position and the second rotational position. So by arranging the connector to a desired location on the panel, and by selecting a desired length of the side portion, the position of the top portion can be set as desired in both the first rotational position as well as the second rotational position.

In an embodiment, the connector comprises a groove having a first notch and a second notch. The first notch and the second notch extend at least partly in a vertical direction downward. The first notch is arranged to fixate the top frame in the first rotational position. The second notch is arranged to fixate the top frame in the second rotational position.

According to this embodiment, the groove is arranged to cooperate with the top frame. The groove is for example arranged parallel to the panel. When a part of the top frame is in the first notch, the top frame is in the first rotational position. The top frame can be moved out of the first notch, and along the groove to the second notch. When a part of the top frame is in the second notch, the top frame is in the second rotational position. Because the first notch and the second notch extend at least partly in the vertical direction, gravity helps to maintain the top frame in respectively the first notch and the second notch. By pushing the top frame upward, the top frame is moved out of respectively the first notch and the second notch.

In an embodiment, the groove is formed in the plastic material.

According to this embodiment, the groove is arranged to receive a part of the top frame. By forming the groove in the plastic material, the part of the top frame is in contact with plastic material. When the top frame vibrates during movement of the roll container, the vibrations are transferred from the top frame to the plastic material around the groove. The plastic material dampens at least part of the vibrations, reducing or even eliminating noise caused by the vibrations.

In an embodiment, the side portion of the top frame comprises a first protrusion. The groove is adapted to cooperate with the first protrusion to guide the top frame between the first rotational position and the second rotational position.

According to this embodiment, the first protrusion interacts with the groove. For example, the first protrusion is inserted in the groove. The groove is arranged to receive the first protrusion. The first protrusion comprises, for example, a distal end that is wider than a proximal end to prevent the first protrusion from leaving the groove. The groove has a bottom surface or does not have a bottom surface. The groove may be straight or curved.

In an embodiment, the side portion comprises a second protrusion arranged at an offset from first protrusion along the longitudinal direction of the side portion. The connector comprises a second groove adapted to cooperate with the second protrusion to guide the top frame between the first rotational position and the second rotational position.

According to this embodiment, the second protrusion interacts with the second groove. The second groove is arranged to receive the second protrusion. The second protrusion comprises, for example, a distal end that is wider than a proximal end to prevent the second protrusion from leaving the second groove. The second groove has a bottom surface or does not have a bottom surface. The second groove may be straight or curved. The second groove is, for example, shorter than the groove, for example 3 times shorter or 5 times shorter. The second groove is, for example, a hole sufficiently large enough to receive the second protrusion and to allow the second protrusion to move down upward when the top frame enters the first notch and/or the second notch. Because of the offset between the first protrusion and the second protrusion along the longitudinal direction of the side portion, one of the first protrusion and the second protrusion acts as a pivot point. By pushing the top frame, the pivot point causes the top frame to rotate. Because this pivot point is created, it is not needed to move the top frame carefully between the first rotational position and the second rotational position. By simply pushing or pulling the top frame, the pivot point causes a rotation of the top frame between the first rotational position and the second rotational position.

In an embodiment, the groove has a third notch extending at least partly vertically downward. The third notch is arranged to fixate the top frame in a third rotational position. The second rotational position is between the first rotational position and the third rotational position.

According to this embodiment, the top frame is able to be fixated in a third rotational position. Preferably, the first rotational position is at the back panel of the roll container, and the second rotational position is near the center of the roll container. By providing the third rotational position, the top frame can be brought further to the front of the roll container. In the third rotational position, the top frame can be easily reached to load the top frame with hanging goods. Easy loading is achieved because the top frame is near the front of the roll container at the third rotational position. In addition, the top portion of the top frame may be at a lower height in the third rotational position than in the second rotational position. This way, loading the hanging goods onto the top frame becomes easier especially when hanging goods that are heavy, and/or the person loading the roll container is a small person.

In an embodiment, the groove has a first groove portion from the first notch to the second notch, and a second groove portion from the second notch and the third notch. The first groove portion is arranged to guide the first protrusion over a first vertical displacement. The second groove portion is arranged to guide the first protrusion over a second vertical displacement that is smaller than the first vertical displacement.

According to this embodiment, the top portion of the top frame moves a large amount in the vertical direction when moving between the first rotational position and the second rotational position. The top portion of the top frame moves a small amount in the vertical direction when moving between the second rotational position and the third rotational position. This has the advantage that the roll container only has a limited height when the top frame is in the first rotational position. This limited height is increased by a large amount when moving the top frame from the first rotational position to the second rotational position, which allows the roll container to store a large amount of goods. Further, in the third position, hanging goods are loaded on the top frame. By displacing only over a small amount in the vertical direction, when moving the top frame from the third rotational position to the second rotational position, it is prevented that the heavy weight of the goods hanging from the top frame needed to be lifted over a large distance. This makes it easier to load the roll container.

In an embodiment, the first groove portion is curved with a first radius. The second groove portion is curved with a second radius. The first radius is smaller than the second radius.

According to the embodiment, both the first groove portion and the second groove portion are curved with a radius to allow a smooth movement of the top frame between the first, second and third rotational positions. By providing the small first radius, the first groove portion provides a movement that has a large horizontal component as well as a large vertical component. For example, the horizontal component and the vertical component are equally large. By providing the large second radius, the second groove portion provides a movement that has a small vertical component compared to the horizontal component. For example, the vertical component is 2 times or 5 times or 10 times larger than the horizontal.

In an embodiment, the connector is adapted to allow rotation of the top frame to a third rotational position. The second rotational position is between the first rotational position and the third rotational position.

In an embodiment, the roll container comprises a base plate and a back panel. The panel and the back panel extend vertically from the base plate. The panel and the back panel are arranged perpendicular to each other. In the first rotational position, the top portion of the top frame is closest to the back panel. In the third rotational position, the top portion of the top frame is closest to a front edge of the base plate opposite to the back panel. In the second rotational position, the top portion of the top frame is above the base plate between front edge and the back panel.

According to this embodiment, the top frame is stored when it is not used in the first rotational position. In the first rotational position, the top frame is moved out of the way to reducing interference with other uses of the roll container. Interference is reduced because, the top frame is near or at or above the back panel. In the second rotational position, the top frame is arranged to provide the most space to hang goods in the roll container without the goods extending out of the roll container or touching a panel. In the third rotational position, the top frame is in a convenient position to load and unload goods to and from the top frame via the front of the roll container.

In an embodiment, the roll container comprises a handle connected to the top frame for rotating the top frame.

According to this embodiment, the handle improves the convenience with which the top frame can be rotated by hand. For example, the handle is connected to the side portion of the top frame. For example, one side of the side portion holds the top portion, whereas an opposite side of the side portion is connected to the handle. This example provides easy access to the top frame, when the top frame is in the first rotational position. In the first rotational position, the top portion is far away from the front of the roll container. However, the handle is close to the front of the roll container for easy access.

In an embodiment, the connector comprises an aperture to receive a bolt to mount the connector to the panel.

According to this embodiment, the connector is mounted to the panel via a bolt. The bolt sits in the aperture in the connector.

In an embodiment, the connector comprises a first body and a second body. The first body and the second body are adapted to cooperate with each other to mount the connector to the panel. The first body and the second body are arranged on opposite sides of the panel. The first body and the second body are connected to each other through an opening in the panel.

According to this embodiment, the connector is mounted to the panel via the first and second bodies arranged on opposite sides of the panel. The first and second bodies are connected to each other, for example, via openings in the metal grating structure of the panel or via a dedicated opening in the panel. The first body and/or the second body may lie on a part of the panel, for example on an edge of the panel or on a protrusion of the panel. The first body and/or the second body are, for example, clamped to each other via a bolt or via a snap-on connection or via a spring.

In an embodiment, the roll container comprises a further connector and a further panel. The further panel is arranged parallel and at an offset of the panel. The top frame comprises a further side portion that is arranged parallel to the side portion at an opposite side of the top portion. The further connector is connected to the further side portion.

According to this embodiment, the roll container comprises two connectors according to the fourth aspect of the invention. For example, each connector is mounted on an opposing side panel. By supporting the top frame via both connectors, the top frame is able to carry a large weight of hanging goods.

The connectors are described above in the different aspects of the invention are, for example, made by injection molding or by 3D-printing. The connector is, for example, made from a single type of plastic material, or from multiple types of plastic material. The connector comprises, for example, a plastic material and a material other than plastic, such as metal or ceramic.

The various aspects of the invention are, in an embodiment, combined in a single roll container. The roll container according to this embodiment comprises the connector according to the first aspect of the invention to connect a beam with a body. The roll container is adapted to be converted from a first configuration to a second configuration according to the second aspect of the invention. The roll container comprises the modular guiding system according to the third aspect of the invention to guide a mounting bar. The roll container comprises the connector according to the fourth aspect of the invention to rotate the top frame.

The invention will be described in more detail below with reference to the figures, in which in a non-limiting manner exemplary embodiments of the invention will be shown. The same reference numerals in different figures indicate the same characteristics in different figures.

In the figures:
Fig. 1: Schematically illustrates a roll container in a first configuration according to the invention comprising a shelf, a first panel and a frame;
Fig. 2: Schematically illustrates a first section of the roll container according to the invention, wherein the connector and connecting member are visualised in detail;
Fig. 3: Schematically illustrates a second section of the roll container according to the invention, wherein a connector, first beam and body are visualised in detail;
Fig. 4: Schematically illustrates a third section of the roll container according to the invention, wherein a connector, first beam and body are visualised in detail;
Fig. 4a: Schematically illustrates a connector according to the invention in more detail. The connector is similar as the connector illustrated in Fig. 4. Fig. 4a shows the connector in different perspectives: (i) isometric view, (ii) top view, (iii) front view and (iv) bottom view;
Fig. 5: Schematically illustrates a fourth section of the roll container according to the invention, wherein a connector, first beam and body are visualised in detail;

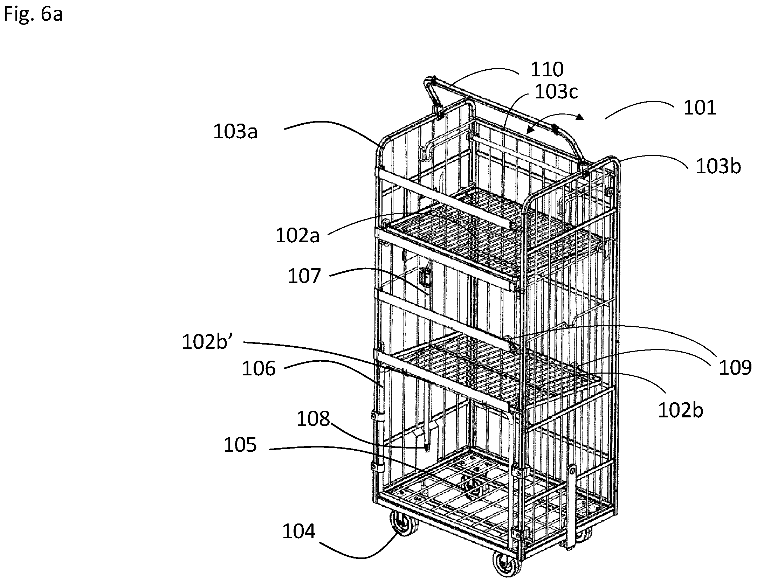

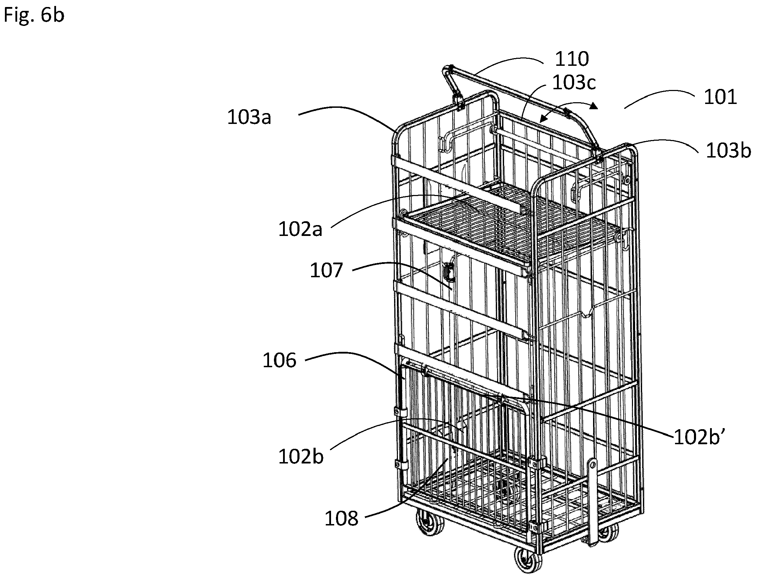

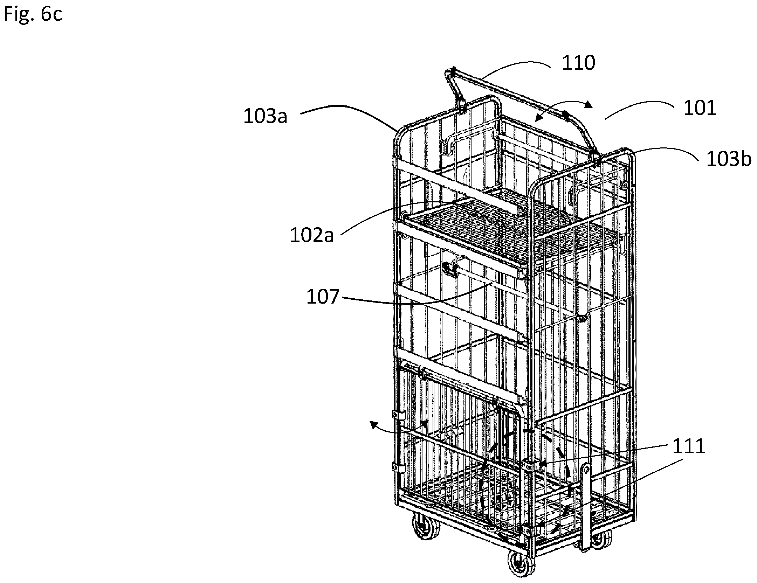

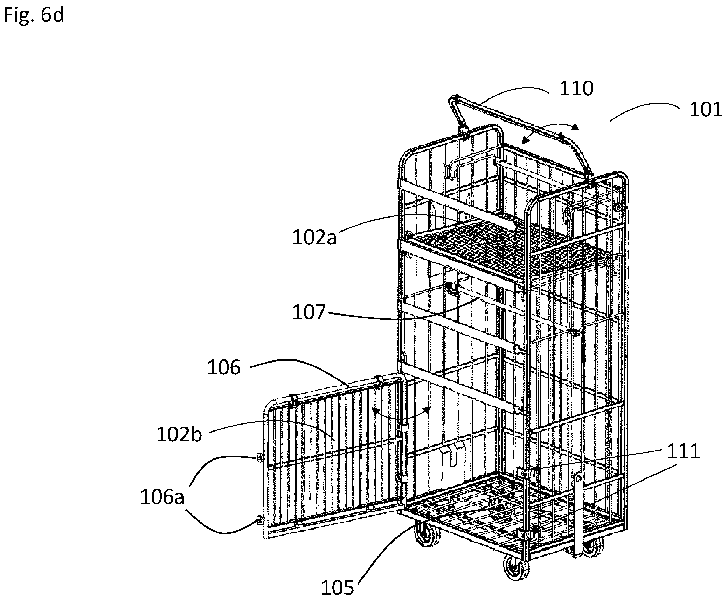

Figs. 6a-6d: Schematically illustrate a roll container according to the invention, comprising a shelf, a first panel and a frame, which roll container is adapted to be converted from a first configuration to a second configuration, wherein in Fig. 6a the roll container is in a first configuration, wherein in Fig. 6b the shelf of the roll container is pivoted from the first configuration to the second configuration, wherein in Fig. 6c a mountable bar of the roll container is mounted horizontally inside the roll container in the second configuration, and wherein in Fig. 6d the shelf is pivoted together with the frame relative to the first panel;
Fig. 7: Schematically illustrates the tilting of a grating structure of a roll container according to the invention from its suspension.
Fig. 8: Schematically illustrates a roll container according to the third aspect of the invention.
Figs. 9-11: Schematically illustrates a front view of a pair of guiding elements according to an embodiment of the present invention.
Figs. 12-14: Schematically illustrate a connector for holding the top frame in various rotational positions according to the fourth aspect of the invention.

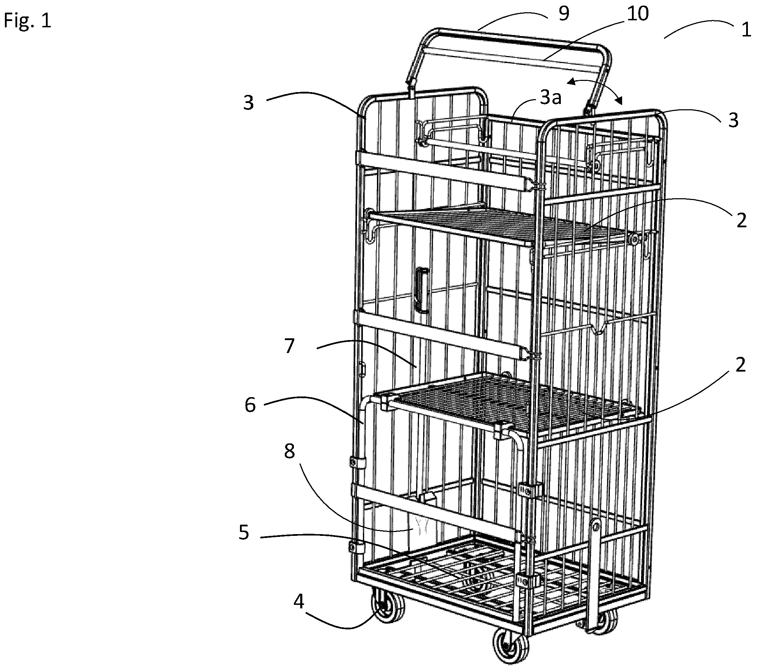

Figure 1 schematically illustrates an example of a roll container in a first configuration according to the invention comprising a shelf, a first panel and a frame. In Figure 1, the roll container 1 comprises two horizontal shelves 2, mounted between two opposite panels 3. Further, the roll container comprises a back panel 3a. The back panel 3a is perpendicular to the opposite panels 3. The three panels (opposite panels 3 and back panel 3a) are all mounted at the edge of a base plate 5. Underneath the base plate 5, four wheels 4 are attached near the corners to move the roll container 1. The base plate 5, panels 3, 3a and the shelves 2 are all constructed as metallic grating or lattice structures. However, these sections can alternatively be produced with a closed shape without spacings. Also, other materials are possible instead of metal, like plastic or wood.

At the front side of the roll container 1, a frame 6 is arranged perpendicular to the opposite panels 3. In the configuration in Fig. 1, the frame 6 is parallel to the back panel 3a. The frame 6 is connected to the shelve 2 by connectors, which will be further explained below. In Fig. 1, the frame 6 is shown with an open plane. However, the frame 6 may be constructed as well as a grating or lattice structure, like the shelves 2 or panels 3, 3a.

The roll container 1 in Figure 1 further comprises a mountable bar 7, which is vertically connected by a connecting member 8 in the first configuration. The connecting member 8 may comprise a corresponding cavity, which fits for the mountable bar 7 at one end. In Figure 1, the mountable bar 7 includes a closed hook at the other end, which closed hook grasps a metallic bar in the metallic structure of panel 3. The closed hook provides sufficient spacing to lift the mountable bar 7 out the connecting member 8. Beneficial is that the closed hook remains around the metallic bar of panel 3 during this operation.

The roll container 1 further comprises a top frame 9. The top frame 9 comprises a top bar 10. The top bar 10 is connected perpendicularly to the top of the opposite panels 3. The top frame 9 is adapted to be pivoted from a low position to a high position (indicated by the double-sided arrow). In the low position, the height of the roll container is minimal. Hence, less space is required to store the roll container.

In Figure 1, the top bar 10 is near the high position. Therefore, goods can be hanged vertically at the top bar 10. In an embodiment, the top bar is in the high position and the mountable bar is mounted horizontally inside the roll container. This configuration of the roll container enables the twofold vertical storage of e.g. clothing.

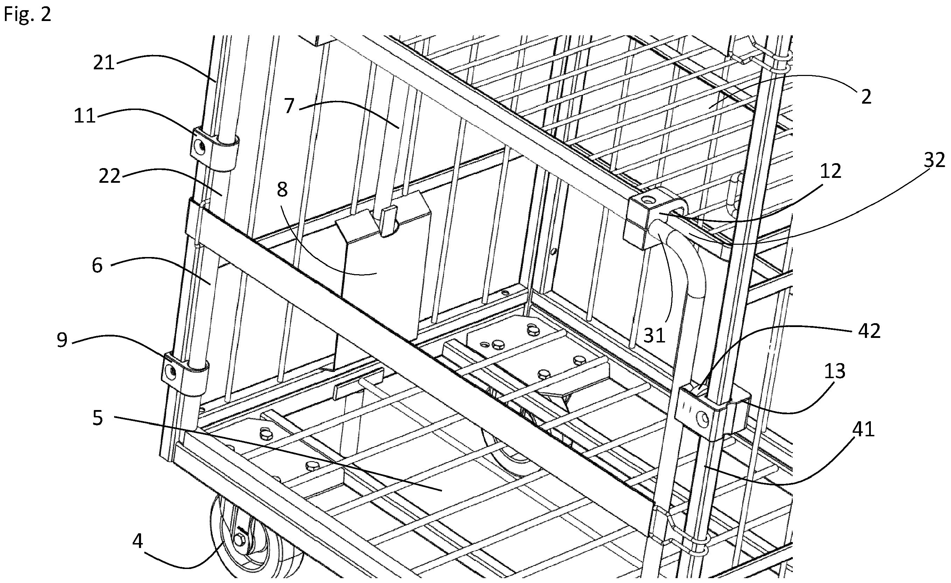

Fig. 2 represents a first section of the roll container of Fig. 1 according to the invention, wherein connectors and a connecting member are visualised in detail. The roll container according to the invention comprises several connectors 11, 12, 13. Each connector 11, 12, 13 connects a first beam 21, 31, 41 and a body 22, 32, 42 to each other.

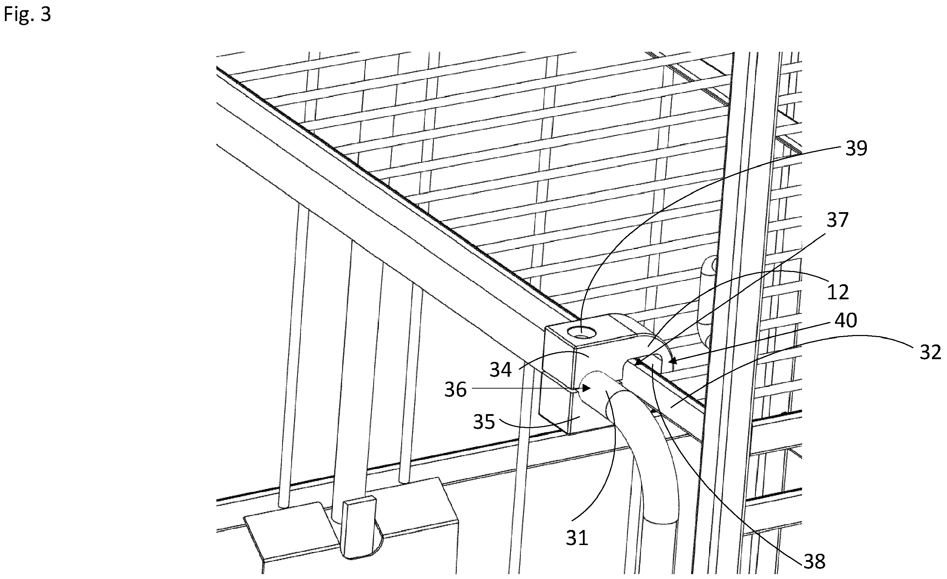

Each connector 11, 12, 13 comprises a first portion and a second portion (see also Figures 3-5). The first portion and the second portion have a first contact area and a second contact area, respectively. The first portion and the second portion together form a first enclosure and a second enclosure. The first enclosure encloses a lateral surface of the first beam 21, 31, 41. The second enclosure encloses at least partly the body 22, 32, 42. The first enclosure and the second enclosure are spaced apart from each other. This results in a spacing between the first beam 21, 31, 41 and the body 22, 32, 42, wherein direct contact between the first beam 21, 31, 41 and the body 22, 32, 42 is avoided. During transportation, the spacing is advantageous to mitigate the noise between the different parts of the roll container, i.e., between the first beam 21, 31, 41 and the body 22, 32, 42.

The connectors 11, 12, 13 are in a closed state. In the closed state, the first beam 21 is connected to the body 22, the first beam 31 is connected to the body 32 and the first beam 41 is connected to the body 42. The first beam 21, 31, 41 is fixed in the first enclosure. In Figure 2, the connectors 11, 12, 13 comprise an aperture to connect the connector to the first beam 21, 31, 41 of the roll container. A bolt is provided in the aperture to realise the connection.

Like in Fig. 1, the roll container further comprises a mountable bar 7. The roll container is in the first configuration, wherein the mountable bar 7 is connected by a connecting member 8. The mountable bar 7 is oriented in the vertical direction in the first configuration. The connecting member 8 is located at an edge of the base plate at the centre of the bottom side of the side panel. The connecting member 8 comprises a cavity, wherein the mountable bar 7 is inserted. Due to the shape of the connecting member 8, the mountable bar 7 can only be removed from the connecting member 8 along the top side of the cavity, i.e. the top plane of the connecting member.

Preferably, the connecting member is made from a plastic material, more preferably ABS. For example, the connecting member is produced by injection molding.

Fig. 3 illustrates another section of the roll container according to invention. Like in Fig. 2, the roll container comprises the first beam 31 and the body 32. The body 32 is parallel to the first beam 31. In Fig. 3, the first beam 31 is part of the frame of the roll container 1 (see also Figure 1). In this embodiment, the body 32 is a second beam of the roll container 1. More particularly, the body 32 is part of the shelf 2 of the roll container (see also Figure 1).

Further, the roll container comprises a connector 12. The connector 12 connects the first beam 31 and the body 32 to each other. The connector 12 comprises a first portion 34 and a second portion 35. The first portion 34 and the second portion 35 together from a first enclosure 36 for enclosing a lateral surface of the first beam 31. In addition, a second enclosure 37 is formed for at least partly enclosing the body 32. In this embodiment, the second enclosure 37 encloses a second lateral surface of the body 32. The first enclosure 36 and the second enclosure 37 are spaced apart from each other. Thus, the connector 12 ensures that the first beam 31 and the body 32 are not in contact with each other. The connector impedes noise resulting from the metallic sections, i.e. the frame and the shelf.

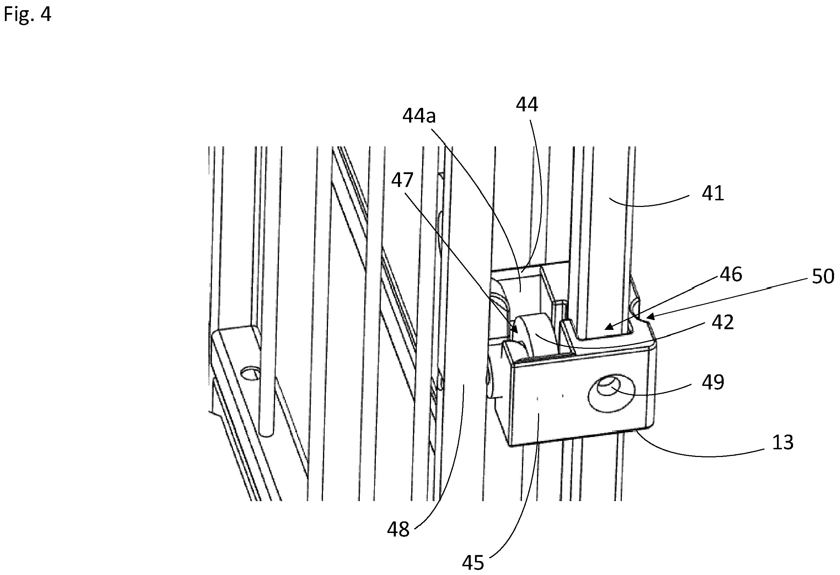

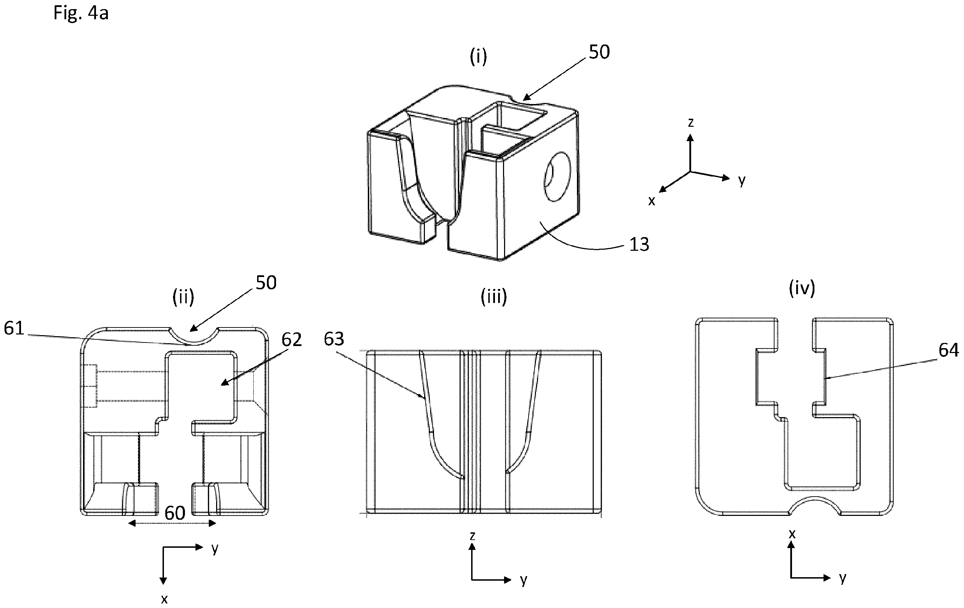

The first portion 34 and the second portion 35 of the connector 12 have a first contact area and a second contact area (both contact areas are not visible in Fig. 3), respectively. In Figure 3, both contact areas are directed towards each other. The connector 13 in Figure 4 is in a closed state, wherein the first contact area and the second contact area are in contact with each other. The contact areas are moveable relative to each other between the closed state and an open state. In the open state (not shown in Figure 3), the first contact area and the second contact area are at a distance from each other to provide a passage for the first beam 31 to enter the first enclosure 36. Additionally, the second enclosure 32 is adapted to provide a second passage for the body to enter the second enclosure 37.

To connect the first beam and the body to each other, the first contact area and the second contact area are moved relative to each other into the closed state. In the closed state, the first contact area and the second contact area are in contact with each other to close the passage. The second enclosure comprises a recess 38. The recess 38 ensures that the body has a limited freedom of movement inside the second enclosure, e.g. to lift the shelf from a suspension.

In Figure 3, the connector 12 further comprises an aperture 39. The aperture 39 is made perpendicular through the first portion 34, first beam 31 and second portion 35. Also, other options available, e.g. by an aperture which goes only through the first portion and the second portion next to the first beam and/or body. The aperture 39 in Figure 3 is provided to connect the connector 13 to the first beam of the roll container, preferably by a bolt.

The first portion and the second portion are manufactured as a single-body construction. The connector 12 has a U shape. The first portion 34 and the second portion 35 are assembled in a hinge 40. The hinge 40 is provided to connect the first portion 34 and the second portion 35 together. Further, the hinge 40 ensures that the first portion 34 and the second portion 35 are movable relative to each other between the closed state and the open state.

In alternative embodiment, the first portion and the second are connectable. For example, the first portion and the second portion may have local grooves and/or protrusions at predetermined locations at the first area and the second area, respectively. When the first portion and the second portion are brought in the closed state, they are connected by the local grooves and/or protrusions. This integration mechanism of the protrusions inside the local grooves can be regarded as a click system.

Fig. 4 illustrates another section of the roll container according to invention. Like in Fig. 2, the roll container comprises the first beam 41 and the body 42. The body 42 is parallel to the first beam 41. In Fig. 4, the first beam 41 is part of the side panel of the roll container (see also Figure 1). In this embodiment, the body 42 is connected to a second beam 48 of the roll container. More particularly, the second beam 48 is part of the frame of the roll container (see also Figure 1).

Further, the roll container comprises the connector 13. The connector 13 connects the first beam 41 and the body 42 to each other. The connector 13 comprises a first portion 44 and a second portion 45. The first portion 44 and the second portion 45 together form a first enclosure 46 for enclosing a lateral surface of the first beam 41. In addition, a second enclosure 47 is formed for at least partly enclosing the body 42. The first enclosure 46 and the second enclosure 47 are spaced apart from each other. Thus, the connector 13 ensures that the first beam 41 and the body 42 are not in contact with each other. The connector impedes noise resulting from the metallic sections, i.e. the frame and the side panel.

The first portion 44 and the second portion 45 of the connector 13 have a first contact area 44a and a second contact area (the second contact area is not visible in Fig. 4), respectively. In Figure 4, both contact areas are directed towards each other. The connector 13 is in a closed state, wherein the first contact area 44a and the second contact area are in contact with each other. The contact areas are moveable relative to each other between the closed state and an open state. In the open state (not shown in Figure 4), the first contact area 44a and the second contact area are at a distance from each other to provide a passage for the first beam 41 to enter the first enclosure 46. Additionally, the second enclosure 47 is adapted to provide a second passage for the body 42 to enter the second enclosure 47.

To connect the first beam 41 and the body 42 to each other, the first contact area 44a and the second contact area are moved relative to each other into the closed state. In the closed state, the first contact area 44a and the second contact area are in contact with each other to close the passage. In the closed state, the first beam is fixed inside the first enclosure 46 formed by the first portion 44 and the second portion 45 of the connector. Preferably, the first portion 44 and the second portion 45 are parallel to each other in the closed state.

In Fig. 4, the body 42 is removable from the second enclosure 47 via the second passage in the closed state. The body 42 is removable from one plane, i.e. an open plane, of the second enclosure 47, wherein the other planes of the second enclosure 47 hold the body 42. In this embodiment, the body 42 has the shape of a disc, wherein the connector 13 serves as a suspension for a particular part of the roll container, e.g. the frame. Along the open plane, the body 42 can be removed or lifted from the second enclosure 47. By removing the body 42 from the second enclosure 47 in the closed state, e.g. the frame can be lifted from its suspension.

In Figure 4, the connector 13 further comprises an aperture 49. The aperture 49 is made perpendicular through the first portion 44, first beam 41 and second portion 45. Also, other options are possible, e.g. by an aperture which goes only through the first portion and the second portion next to the first beam and/or body. The aperture 49 in Figure 4 is provided to connect the connector 13 to the first beam 41 of the roll container 1, preferably by a bolt.

The first portion 44 and the second portion 45 are manufactured as a single-body construction. The connector 13 has a typical U shape. The first portion 44 and the second portion 45 are assembled in a hinge 50. The hinge 50 is provided to connect the first portion 44 and the second portion 45 together. Further, the hinge 50 ensures that the first portion 34 and the second portion 35 are movable relative to each other between the closed state and the open state.

In alternative embodiment, the first portion and the second are connectable. For example, the first portion and the second portion may have local grooves and/or protrusions at predetermined locations at the first area and the second area, respectively. When the first portion and the second portion are brought in the closed state, they are connected by the local grooves and/or protrusions. This integration mechanism of the protrusions inside the local grooves can be regarded as a click system.

Fig. 4a visualises a connector according to the invention in more detail. The connector is similar as the connector 13 illustrated in Fig. 4. Fig. 4a shows the connector 13 in different perspectives: (i) isometric view, (ii) top view, (iii) front view and (iv) bottom view.

The connector 13 is in the closed state (see Fig. 4a (i)). Like in Fig. 4, the connector is manufactured as a single-body construction. The connector 13 has a typical U shape (see also the top view and/or bottom view). As can be deduced from the top view (Fig. 4a (ii)), the connector has a thinning 61 at the hinge 50. The thinning 61 eases the opening (i.e. open state) and closing (i.e. closed state) of the connector. The opening of the connector towards the open state is indicated by the arrow 60. For example, when the connector is made from a flexible material, it is possible to bend the connector open at the hinge.

Further, the circumference of the first enclosure of the connector 13 has a rectangular shape 62. However, other shapes are possible, e.g. a circular shape.

In Fig. 4a (iii), the profile of the second enclosure is depicted. In the embodiment, the second enclosure provides a second passage for the body having the shape of a disc (not shown) to enter the second enclosure. The profile of the second enclosure is tapered 63. The tapered profile provides additional space to enter the body into the second enclosure.

In the bottom view of the connector (see Fig. 4a (iv)) it is visible that the second enclosure has an opening 64 at the underside. The opening 64 is useful to drain water. This prevents rusting of metal parts. For example, during transportation outdoor eventual rainwater can flood away.

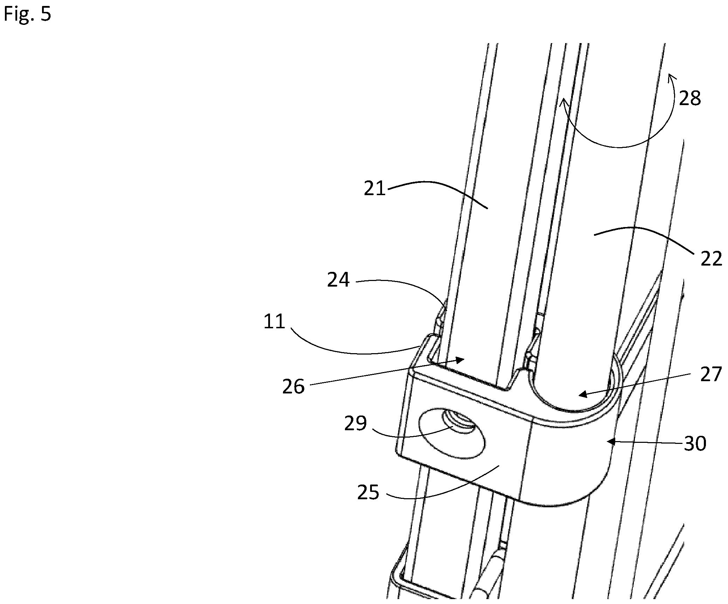

Fig. 5 illustrates another section of the roll container according to invention. Like in Fig. 2, the roll container comprises a first beam 21 and a body 22. The body 22 is parallel to the first beam 21. In Fig. 5, the first beam 21 is part of the side panel of the roll container (see also Figure 1). In this embodiment, the body 22 is a second beam of the roll container. More particularly, the body 22 is part of the frame of the roll container (see also Figure 1).

Further, the roll container comprises a connector 11. The connector 11 connects the first beam 21 and the body 22 to each other. The connector 11 comprises a first portion 24 and a second portion 25. The first portion 24 and the second portion 25 together from a first enclosure 26 for enclosing a lateral surface of the first beam 21. In addition, a second enclosure 27 is formed for at least partly enclosing the body 22. In this embodiment, the second enclosure 27 encloses a second lateral surface of the body 22. The first enclosure 26 and the second enclosure 27 are spaced apart from each other. Thus, the connector 11 ensures that the first beam 21 and the body 22 are not in contact with each other. The connector impedes noise resulting from the metallic sections, i.e. the side panel and the frame.

The first portion 24 and the second portion 25 of the connector 11 have a first contact area and a second contact area (both contact areas are not visible in Fig. 5), respectively. In Figure 5, both contact areas are directed towards each other. The connector 11 is in a closed state, wherein the first contact area and the second contact area are in contact with each other. The contact areas are moveable relative to each other between the closed state and an open state. In the open state (not shown in Figure 5), the first contact area and the second contact area are at a distance from each other to provide a passage for the first beam 21 to enter the first enclosure 26. Additionally, the second enclosure 27 is adapted to provide a second passage for the body 22 to enter the second enclosure 27.

To connect the first beam 21 and the body 22 to each other, the first contact area and the second contact area are moved relative to each other into the closed state. In the closed state, the first contact area and the second contact area are in contact with each other to close the passage. The second enclosure 27 ensures that the body 22 can rotate around its longitudinal axis (indicated by the double-sided arrow 28), e.g. to pivot the frame.

In Figure 5, the connector 11 further comprises an aperture 29. The aperture 29 goes through the first portion 24, first beam 21 and second portion 25. Also, other options are available, e.g. by an aperture which goes only through the first portion 24 and the second portion 25 next to the first beam 21 and/or body 22. The aperture 29 in Figure 5 is provided to connect the connector 11 to the first beam 21 of the roll container, preferably by a bolt.

The first portion 24 and the second portion 25 are manufactured as a single-body construction. The connector 11 has a typical U shape. The first portion 24 and the second portion 25 are assembled in a hinge 30. The hinge 30 is provided to connect the first portion 24 and the second portion 25 together. Further, the hinge 30 ensures that the first portion 24 and the second portion 25 are movable relative to each other between the closed state and the open state.

In alternative embodiment, the first portion and the second are connectable. For example, the first portion and the second portion may have local grooves and/or protrusions at predetermined locations at the first area and the second area, respectively. When the first portion and the second portion are brought in the closed state, they are connected by the local grooves and/or protrusions. This integration mechanism of the protrusions inside the local grooves can be regarded as a click system.

Figures 6a-d schematically illustrate an example of a roll container according to the invention, which is adapted to be converted from a first configuration to a second configuration, and wherein the roll container comprises a shelf, a first panel and a frame. In Figures 6a-d, the roll container 101 comprises an upper shelve 102a and a lower shelve 102b, both mounted between two opposite panels. The opposite panels are a first panel 103a and a second panel 103b. Further, the roll container 101 comprises a back panel 103c. The back panel 103c is perpendicular to the opposite panels 103a, 103b. The three panels (the first panel 103a, the second panel 103b and the back panel 103c) are all mounted at the edge of a base plate 105, and define a space to store goods on the roll container. Underneath the base plate 105, four wheels 104 are attached near the corners to move the roll container 101. The base plate 105, panels 103a, 103b, 103c and the shelves 102a, 102b are all constructed as metallic grating or lattice structures. However, these sections can alternatively be produced with a closed shape without spacings. Also, other materials are possible instead of metal, like plastic or wood.

At the front side of the roll container 101, a frame 106 is arranged perpendicular to the opposite panels 103a, 103b. In the configuration of Figs. 6a-6c, like in Fig. 1, the frame 106 is parallel to the back panel 103c. The frame 106 is connected to the lower shelve 102b by connectors. In Figs. 6a-6d, the frame 106 is shown with an open plane. However, the frame 106 may be constructed as well as a grating or lattice structure, like the shelves 102a, 102b or panels 103, 103a.

Like in Fig. 1, the roll container 103 of Fig. 6a is in the first configuration, wherein the lower shelf 102b is mounted horizontally inside the roll container 101, perpendicular to the frame 106 and the panels 103a, 103b, 103c. Goods can be placed on the shelf, when the shelf is in the horizontal position. Remark that the shelf can be mounted substantially horizontally inside the roll container 101, meaning that the shelf can be mounted under an angle inside the roll container relatively seen from the base plate 105 and/or ground. Preferably, the angle of the shelf remains below 5 degrees in the first configuration, such that goods are transported in a stable manner. Further, the lower shelf 102b comprises a first beam 102b'. The first beam 102b' of the lower shelf 102b is connected to the frame 106 by connectors. Like in Fig. 3, the connectors comprise a recess, which gives the first beam 102b' of the lower shelf a limited freedom of movement to lift the lower shelf 102b.

In Fig. 6a, the lower shelf 102b is suspended with suspension means 109 at the back panel 103c of the roll container. The suspension means 109 are mounted at an opposite side of the lower shelf 102b relative to the first beam 102b' of the lower shelf. The suspension means 109 fit within spacings of the metallic grating structure of the back panel 103c. The suspension means 109 rest on a metallic bar of the back panel 103c.

The lower shelf 102b is adapted to be pivoted from the first configuration to the second configuration. To pivot the lower shelf 102b from the first configuration to the second configuration, first the suspension means 109 at the opposite side are pulled out or lifted from the suspension at the back panel 103c. This may be accomplished by lifting the lower shelf 102b at the opposite side of the lower shelf 102b relative to the first beam 102b' of the lower shelf 102b. Subsequently, the lower shelf 102b can be rotated around its first beam 102b'.

In Fig. 6b, the roll container 101 is in the second configuration. In the second configuration, the lower shelf 102b is in a vertical position and parallel to the frame 106. The frame 106 has substantially the same dimensions compared to the lower shelf 102b. Optionally, the lower shelf 102b is slightly smaller than the frame 106.

The roll container 103 in Figures 6a-6d further comprises a mountable bar 107, which in Figures 6a-6b is vertically connected by a connecting member 108 in the first configuration. The connecting member 108 comprises a corresponding cavity, which fits for the mountable bar 107 at one end. In Figures 6a-6b, the mountable bar 107 includes a closed hook at the other end, which closed hook grasps a metallic bar in the metallic structure of the first panel 103a. The closed hook provides sufficient spacing to lift the mountable bar 107 out the connecting member 108. Beneficial is that the closed hook remains around the metallic bar of the first panel 103a during this operation.

In Fig. 6c, the mountable bar 107 is mounted horizontally inside the roll container 101 in the second configuration between the first panel 103a and the second panel 103b of the roll container. The roll container 101 has an improved functionality. The roll container in the second configuration gives the opportunity to hang up clothing or other products on the mountable bar, while the upper 102a shelve still can be used for storing goods. It is possible to easily switch between shelves for storing goods and the mountable bar 107 to hang up clothing or other products. With this roll container 101 all types of goods or product can be stored and transported. This improved functionality results in further advantages, like reduction of costs and improved transportation of goods or products. In an embodiment, the ends of the mountable bar 107 are provided with plastic ends, and/or the connecting member 108 is provided with a plastic part to contact the mountable bar 107. By providing the plastic ends and/or the plastic part, the mountable bar 107 is in contact with the connecting member 108 and the panel 103b via a plastic material to reduce noise caused by vibrations of the mountable bar 107.

The roll container 101 further comprises a top frame 110. The top frame 110 is connected perpendicularly to the top of the opposite panels 103a, 103b. The top frame 110 is adapted to be pivoted from a low position to a high position (indicated by the double-sided arrow). In the low position, the height of the roll container is minimal. Hence, less space is required to store the roll container.

In Figures 6a-6d, the top frame 110 is near the high position. Therefore, goods can be hanged vertically at the top frame 110. In Fig. 6c, the top frame 110 is near the high position and the mountable bar 107 is mounted horizontally inside the roll container 101, which enables the twofold vertical storage of e.g. clothing. Remark that the upper shelf 102a can be lifted out the roll container 101, such that there is more space to hang up the goods.

Optionally, the top frame 110 may comprise a top bar 10 as visualised in Figure 1.

In the second configuration, the lower shelf 102b and the frame 106 are rotatable around a vertical bar of the first panel 103a, wherein the frame 106 is hinged. This is shown in Fig. 6d. However, other ways of rotation are possible.

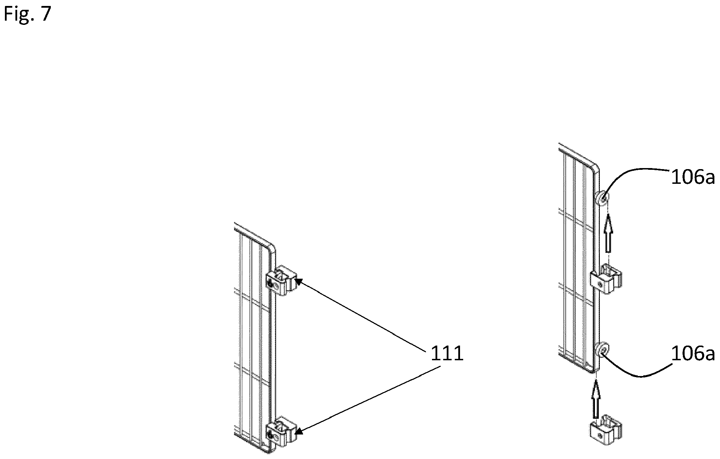

To pivot the frame 106 together with the lower shelf 102b around the vertical bar, the frame is lifted from its suspension, see also the indicated dashed region in Fig. 6c. Like in Fig. 4, the frame comprises a pair of suspension means 106a, wherein each suspension means 106a is removable from an enclosure of the corresponding suspension 111, i.e. a connector. Each suspension means 106a has the shape of a disc. The pair of suspension means 106a are removable from one plane, i.e. an open plane, of the connector 111, wherein the other planes of the connector hold the suspension means 106a. The removal of the pair of suspension means 106a is visualised in Fig. 7. On the left-hand side of Fig. 7, the suspension means of a grating lattice structure are held in the corresponding connectors. The grating lattice structure can e.g. be the frame 106 of Figures 6a-6d. On the right-hand side of Fig. 7, the pair of suspension means 106a are removed from the open plane of each connector 111, as indicated by the arrows.

By removing the pair of suspension means 106a from the connector 111, the frame 106 together with the lower shelf 102b can be lifted from its suspension. Pivoting the frame 106 together with the lower shelf 102b, according to the indicated double-side arrow in Figs. 6c-6d, results in the situation as shown in Fig. 6d. The roll container 103 now has an increased open space to easily store goods on the base plate 105 or hang up goods on the mountable bar, e.g. large-size clothing.

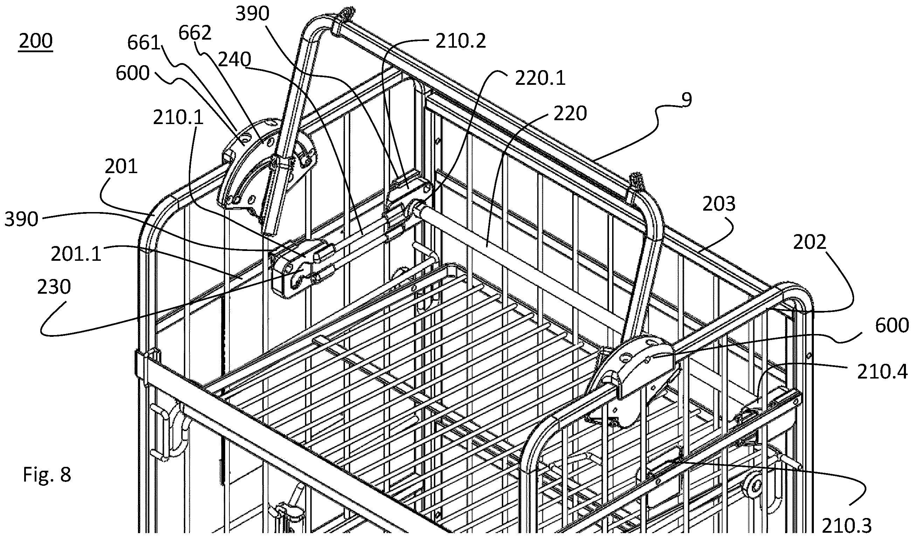

Figure 8 schematically shows a top portion of a roll container 200 according to the third aspect of the invention. The roll container 200 schematically shows a first panel 201 and a second panel 202. In the embodiment as shown, the panels 201 and 202 are made of metal wires or strips. In the embodiment as shown, the first panel 201 is arranged substantially parallel to the second panel 202.

In an embodiment, the first and second panel can e.g. be mounted to a base plate, in a similar manner as plates 103a and 103b are arranged on base plate 105, as shown in Figure 6a.

The roll container 200 further comprises a modular guide system 210 which enables the positioning of a mounting bar 220 at different positions in or on the roll container 200. In the embodiment as shown, the modular guide system 210 a first guide assembly comprising a first guiding element 210.1 and a second guiding element 210, the first guiding element 210.1 and the second guiding element 210.2 being mounted to the first panel 201 of the roll container 200.

In accordance with the present invention, the guiding elements 210.1 and 210.2 are provided with a cavity into which an end portion of a mounting bar, e.g. mounting bar 220, can be inserted.

In the embodiment as shown, the modular guide system 210 further comprises a second guide assembly comprising a third guiding element 210.3 and a fourth guiding element 210.4, the third guiding element 210.3 and the fourth guiding element 210.4 being configured to be mounted to the second panel 202 of the roll container 200.

In the embodiment as shown, the first and third guiding elements are arranged at substantially the same depth in the container, approximately in the middle of the container. The second and fourth guiding elements are also arranged at substantially the same depth in the container, close to the back panel 203 of the container 200.

In the embodiment as shown, the mounting bar 220 is held by the second guiding element 210.2 and the fourth guiding element 210.4.

Alternatively, the mounting bar 220 could be arranged to be held by the first and third guiding elements 210.1 and 210.3, in which case the mounting bar 220 would be arranged substantially in the middle of the container 220.

In accordance with the invention, each of the first, second, third and fourth guiding element 210.1 - 210.4 comprises a cavity 230 for receiving an end portion 220.1 of the mounting bar 220, the cavity 230 having an opening that is configured to enable the end portion 220.1 to enter the cavity 230 and is configured to guide the end portion to a secured position in the cavity 230. When the end portion of the mounting bar, e.g. mounting bar 220, is arranged in the secured position in the guiding element, is it obstructed or restricted to move in the horizontal direction, i.e. it is maintained in its horizontal position. As will be explained in more detail below, this securing is realised by a suitable shaping of the opening of the cavity that guides the end portion to the secured position.

In the embodiment as shown in Figure 8, the first, second, third and fourth guiding elements are thus configured and arranged to secure the mounting bar 220 in a first position, shown in Figure 8, thereby arranging a first end portion 220.1 of the mounting bar 220 in the secured position in the cavity of the second guiding element 210.2 and a second end portion of the mounting bar, which is obscured by the fourth guiding element in Figure 8, in the secured position in the cavity of the fourth guiding element 210.4, and the first, second, third and fourth guiding elements are configured and arranged to secure the mounting bar 220 in a second position, thereby arranging the first end portion 220.1 of the mounting bar 220 in the secured position in the cavity of the first guiding element 210.1 and the second end portion of the mounting bar in the secured position in the cavity of the third guiding element 210.3.

In accordance with the present invention, the first, second, third and fourth guiding elements 210.1 - 210.4 are made from plastic or the like.
In an embodiment, the guiding elements can be made by injection moulding or by 3D printing.

In accordance with the present invention, the openings of the cavities 230 of the guiding elements 210.1 - 210.4 serve a dual purpose. The openings are configured to receive the end portion of the mounting bar, i.e. they enable the end portion of the mounting bar to enter the cavity or to be moved inside the cavity. The openings are further configured to guide the end portion of the mounting bar to the secured position. This dual objective can e.g. be realised by different portions of the opening of the cavity.

As such, in an embodiment, the opening of the cavity of each of the guiding elements comprises a first portion enabling the end portion of the mounting bar to enter the cavity and a second portion to guide the end portion to the secured position.

Figure 8 further schematically shows a first guiding member 240, which can be considered part of the first guide assembly, the first guiding member 240 being configured to guide or support the mounting bar 220 when the mounting bar is transferred from the first position to the second position or vice versa. In the embodiment as shown, the first guiding member comprises a pair of rods 240. These can e.g. be plastic or metal rods. Alternatively, the guiding member can comprise one or more wires of elastic members such as rubber bands.

In an embodiment, the mounting bar 220 forms part of a shelf, for example shelf 2 to move the shelf from an at least substantially vertical position to an at least substantially horizontal position and vice versa. In this example, the body 32 is connected to an end of the mounting bar 220.

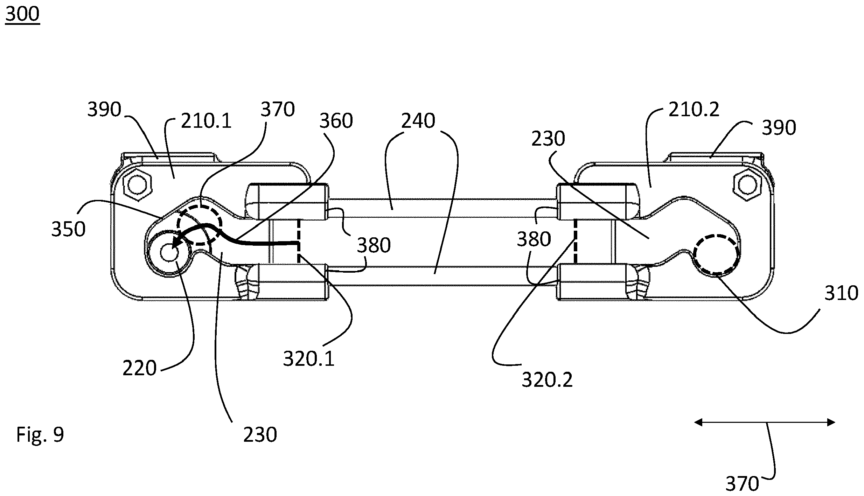

Figure 9 - 11 schematically show more detailed front views of the first guiding assembly 210.1, 210.2, 240.

Figure 9 schematically shows a first front view 300 of the first guiding assembly which includes the first guiding element 210.1, the second guiding element 210.2 and a guiding member 240. Referring to Figure 8, the shown first guiding assembly shown is configured to be mounted to the first panel 201 of the roll container 200.

Figure 9 further shows the mounting bar 220 arranged in the secured position in the first guiding element 210.1. The dotted circle 310 indicates the secured position for the mounting bar in the second guiding element 210.2.

In accordance with the invention, the guiding elements 210.1 and 210.2 each comprise a cavity 230 for receiving an end portion of the mounting bar 220, the cavity 230 having an opening that is configured to enable the end portion to enter the cavity 230 and is configured to guide the end portion to a secured position in the cavity 230. The openings are configured to receive the end portion of the mounting bar, i.e. they enable the end portion of the mounting bar to enter the cavity or to be moved inside the cavity. The openings are further configured to guide the end portion of the mounting bar to the secured position. This dual objective can e.g. be realised by different portions of the opening of the cavity.

As such, in an embodiment, the opening of the cavity of each of the guiding elements comprises a first portion enabling the end portion of the mounting bar to enter the cavity and a second portion to guide the end portion to the secured position. In Figure 9, dotted lines 320.1 and 320.2 indicate part of the first portion of the openings of the cavities of the guiding elements 210.1 and 210.2 that enables the end portion of the mounting bar 220 to be inserted into the cavity or to be removed from the cavity. The first part of the opening of the cavity may e.g. be arranged in a plane that is perpendicular to the plane of the drawing.

In Figure 9, reference number 350 indicated a contour of the second part of the opening of the cavity 230, said second part of the opening being configured to guide the mounting bar to the secured position.

In Figure 9, the arrow 360 schematically illustrates the trajectory that is followed by the mounting bar, or the end portion thereof, from entering the cavity 230 to the secured position. When the end portion of the mounting bar, e.g. mounting bar 220, is arranged in the secured position in the guiding element i.e. guiding element 210.1 in Figure 9, is it obstructed or restricted to move in the horizontal direction, indicated by the arrow 370, i.e. it is maintained in its horizontal position. In the embodiment as shown, such a securing is realised by the particular shaping of the opening of the cavity that guides the end portion to the secured position. More specifically, the contour 350 of the opening portion of the cavity guides the mounting bar first towards an elevated position, indicated by the dotted circle 370, and then towards the lower secured position. By having this intermediate, elevated position, which is arranged between the secured position and the entrance position, the weight of the mounting bar will hold the mounting bar in the secured position, e.g. during transport of the roll container. As an alternative to providing the elevated intermediate position, i.e. may also be sufficient to ensure that the secured position is at a lower level that the position at which the mounting bar enters the cavity.

In the embodiment as shown, the first portions 320.1, 320.2 of the openings of the guiding elements 210.1 and 210.2 are configured to face each other. This facilitates a transfer of the mounting bar from the secured position of one of the guiding elements to the other or vice versa.

Considering the layout of the four guiding elements 210.1 - 210.4 shown in Figure 8, it can be understood that the portions of the openings of the guiding elements that serve to guide the mounting bar are arranged in such manner that the second portion of the opening of the first guiding element 210.1, which is indicated by contour 350 in Figure 9, is configured to face the second portion of the opening of the third guiding element, element 210.3 shown in Figure 8, and wherein the second portion of the opening of the second guiding element 210.2 is configured to face the second portion of the opening of the fourth guiding element 210.4.

In the embodiment shown in Figure 9, the first guiding assembly comprises a first guiding member 240, the first guiding member 240 being configured to guide or support the mounting bar 220 when the mounting bar 220 is transferred from the secured position in the first guiding element 210.1 to the secured position in the second guiding element 210.2 or vice versa.

In the embodiment as shown, the guiding member comprises a pair of rods or bars 240. In an embodiment, only a single bar or rod, e.g. the lower bar or rod, can be applied as well. In the embodiment as shown, the guiding elements 210.1 and 210.2 have apertures 380 into which the rods or bars of the guiding member 240 can be inserted. In this respect, it can be pointed out that during installation of the modular guiding system, the one or more elements of the guiding member, e.g. guiding rods 240, can be cut to a desired length, thereby defining the distance between first position of the mounting bar and the second position of the mounting bar in the roll container 200.

As an alternative to the use of one or more rods or bar, a guiding member comprising one or more wires or flexible members such as rubber bands can be considered as well.

In the embodiment as shown in Figure 9, the first and second guiding elements 210.1 and 210.2 each comprise a slot 390, arranged at the back of the elements 210.1, 210.2 for mounting the guiding elements to the first panel 201 of the roll container 200.

Referring to Figure 8, by means of the slots 390, the guiding elements 210.1 and 210.2 can e.g. be mounted to a strip 201.1 of the first panel 201.

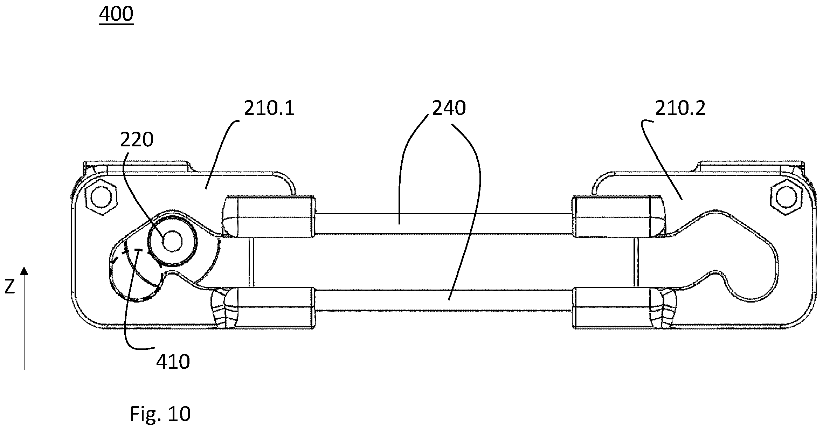

Figure 10 schematically shows a second front view 400 of the first guiding assembly which includes the first guiding element 210.1, the second guiding element 210.2 and a guiding member 240.

Figure 10 further shows the mounting bar 220 arranged in the elevated position as discussed with reference to Figure 9. The mounting bar 220 thus needs to be elevated, i.e. moved upwards in the indicated Z-direction, in order to bring it to the secured position, indicated by the dotted circle 410. Once in the secured position, the weight of the mounting bar, and any items mounted to it, will hold the mounting bar 220 in place.

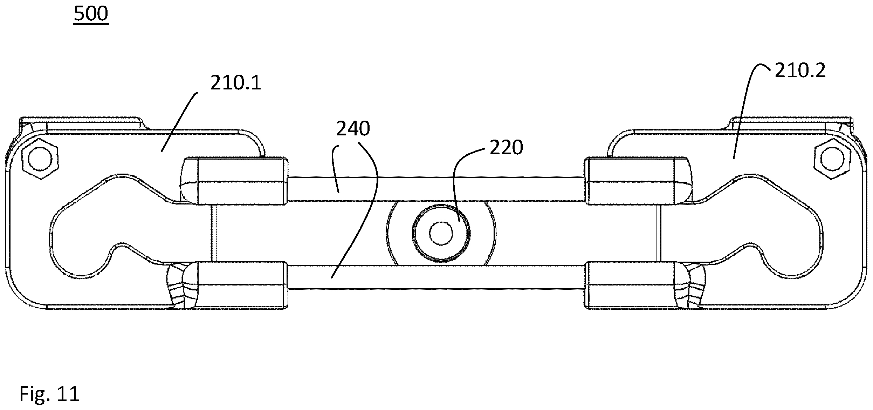

Figure 11 schematically shows a third front view 500 of the first guiding assembly which includes the first guiding element 210.1, the second guiding element 210.2 and a guiding member 240. Figure 11 further shows the mounting bar 220 in a position in between the first guiding element 210.1 and the second guiding element 210.2. in such a position, the mounting bar 220, and any items mounted to it, may advantageously be supported by the guiding member 240, in case said guiding member comprises a rigid structure or element such as a rod or bar. It should however be pointed out that the invention may also be implemented with a flexible guiding member or without any guiding member.

Although Figures 9-11 refer to the first guiding assembly, comprising the first and second guiding elements 210.1 and 210.2, it will be understood that the second guiding assembly, comprising third and fourth guiding elements 210.3 and 210.4 will, preferably, have the same or similar structure as the first guiding assembly.

In an embodiment of the present invention, the first, second, third and fourth guiding elements 210.1 - 210.4 as e.g. shown in Figure 8, are arranged, during use, in a substantially horizontal plane. Alternatively, the first and third elements 210.1 and 210.3 may be arranged in a different horizontal plane than the second and fourth elements 210.2 and 210.4.

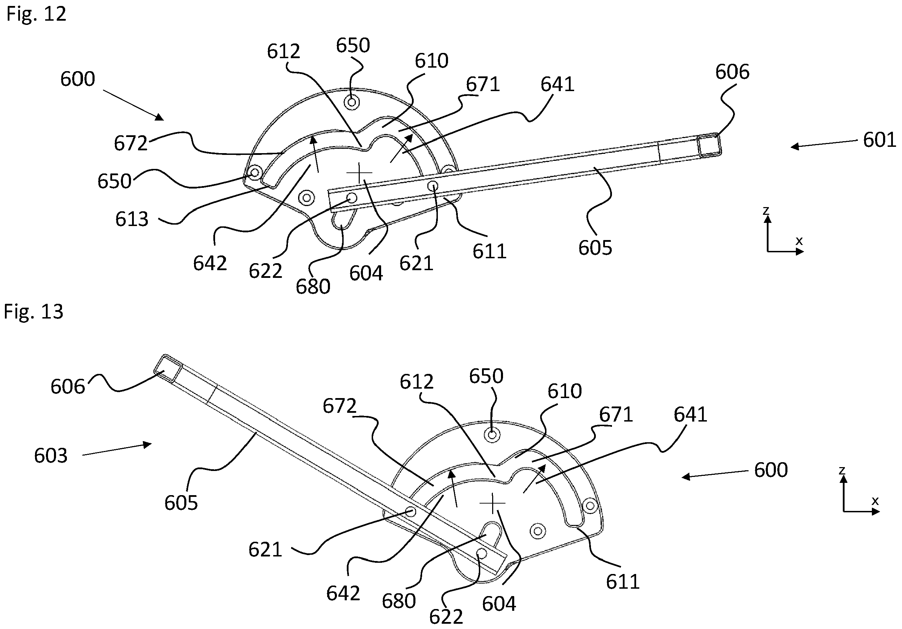

Figs 12-14 depict a close up of a connector 600 according an embodiment of the invention. The connector 600 may be used in a roll container according to any one of the other embodiments described above, for example in roll container 200 as shown in Fig. 8.

The connector is mounted to panel 201. The connector 600 optionally comprises a plastic material. The connector 600 is for use in the roll container 1 to rotatably connect the top frame 9 to the panel 201. Another connector 600 is on panel 202, which is arranged parallel and at an offset of the panel 201.

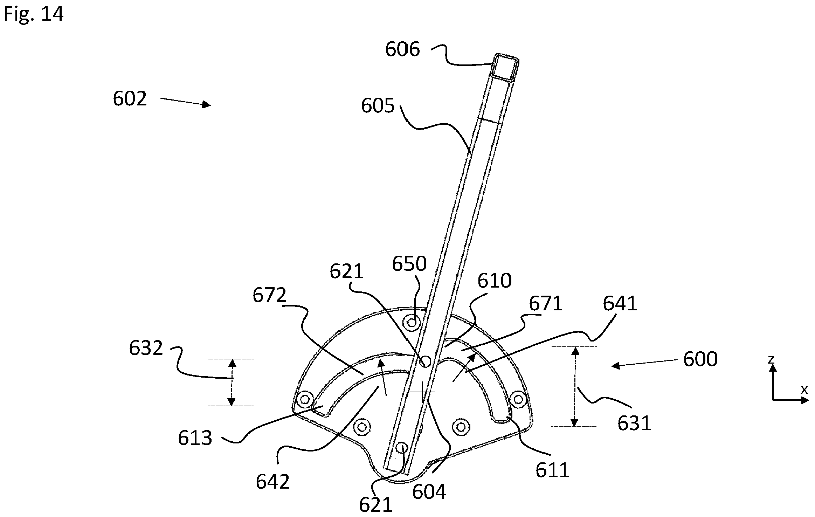

Fig 12 shows the top frame 9 in the first rotational position 601. Fig 13 shows the top frame 9 in the third rotational position 603. Fig 14 shows the top frame 9 in the second rotational position 602. In these figures, the vertical direction is indicated by the z-axis. The x-axis indicates a horizontal direction. The connector 600 is adapted to allow rotation of the top frame 9 between a first rotational position 601 and a second rotational position 602. The top frame 9 extends further in the vertical direction in the second rotational position than in the first rotational position. As is clear when comparing Fig 12. with Fig 14, a top portion 606 of the top frame 9 extends more away from the connector 600 in the vertical direction in Fig. 14 than in Fig 12.

The top frame 9 comprises the top portion 606 and a side portion 605. The connector 600 is adapted to allow rotation of the top frame 9 about a rotation axis 604 perpendicular to the panel 201. The side portion 605 extends in a longitudinal direction parallel to the panel 201 and holds the top portion 606 at an offset from the rotation axis 604. The rotation axis 604 is indicated with a cross. The location of the rotation axis 604 is determined by the shape of the groove 610. The rotation axis 604 extends in the y-direction and is perpendicular to the x-axis and to the z-axis. The rotation axis 604 is in the horizontal plane. The top portion 606 extends in a longitudinal direction perpendicular to the panel 201. The side portion 605 is connected to the connector 600. The top portion 605 is at a higher vertical position in the second rotational position 602 than in the first rotational position 601.

The connector 600 comprises a groove 610 having a first notch 611 and a second notch 612. The first notch 611 and the second notch 612 extend at least partly in a vertical direction downward. The first notch 611 is arranged to fixate the top frame 9 in the first rotational position 601. The second notch 612 is arranged to fixate the top frame 9 in the second rotational position 602.

The connector 600 comprises a first body 661 and a second body 662, as shown in Fig 8. The first body 661 and the second body 662 are adapted to cooperate with each other to mount the connector 600 to the panel 201. The first body 661 and the second body 662 are arranged on opposite sides of the panel 201. The first body 661 is arranged on the outer side of the panel 201. The second body 662 is arranged on the inner side of the panel 201. The first body 661 and the second body 662 are connected to each other through an opening in the panel 201. Alternatively, the first body 661 and the second body 662 are connected to each other over an upper edge of the panel 201.

The first body 661 is made from a plastic material. The groove 610 is arranged in the second body 662 on the inner side of the panel 201. The second body 662 is made from a plastic material. The groove 610 is formed in the plastic material.

Also shown in Fig. 8 is that the top frame 9 is in the second rotational position 602. Rotating the top portion 606 towards the back panel 203 brings the top frame 9 in the first rotational position 601. Rotating the top portion 606 away from the back panel 203 and beyond the second rotational position 602, brings the top frame 9 in the third rotational position 603.

The side portion 605 of the top frame 9 comprises a first protrusion 621, for example a pin. The groove 610 is adapted to cooperate with the first protrusion 621 to guide the top frame 9 between the first rotational position 601 and the second rotational position 602. The side portion 605 comprises a second protrusion 622, for example another pin, arranged at an offset from first protrusion 621 along the longitudinal direction of the side portion 605. The connector 600 comprises a second groove 680 adapted to cooperate with the second protrusion 622 to guide the top frame 9 between the first rotational position 601 and the second rotational position 602. The location of the rotation axis 604 is determined by the locations and shapes of the groove 610 and the second groove 680.

The groove 610 has a third notch 613 extending at least partly vertically downward. The third notch 613 is arranged to fixate the top frame 9 in a third rotational position 603, as shown in Fig 13. The second rotational position 602 is between the first rotational position 601 and the third rotational position 603. The groove 610 has a first groove portion 671 from the first notch 611 to the second notch 612, and a second groove portion 672 from the second notch 612 to the third notch 613. The first groove portion 671 is arranged to guide the first protrusion 621 over a first vertical displacement 631. The second groove portion 672 is arranged to guide the first protrusion 621 over a second vertical displacement 632 that is smaller than the first vertical displacement 631. The first groove portion 671 is curved with a first radius 641. The second groove portion 672 is curved with a second radius 642. The first radius 641 is smaller than the second radius 642.

The connector 600 is, in an embodiment, used in a roll container comprising a base plate, such as base plate 5 and a back panel 203. The panel 201 and the back panel 203 extend vertically from the base plate 5. The panel 201 and the back panel 203 are arranged perpendicular to each other. In the first rotational position 601, the top portion 606 of the top frame 9 is closest to the back panel 203. In the third rotational position 603, the top portion 606 of the top frame 9 is closest to a front edge of the base plate 5 opposite to the back panel 203. The frame 106 is arranged at the front edge of the base plate 5. In the second rotational position 602, the top portion 606 of the top frame 9 is above the base plate 5 between the front edge and the back panel 103c.

The connector comprises multiple aperture 650. Each aperture 650 is arranged to receive a bolt to mount the connector 600 to the panel 201.

As required, this document describes detailed embodiments of the present invention. However it must be understood that the disclosed embodiments serve exclusively as examples, and that the invention may also be implemented in other forms. Therefore specific constructional aspects which are disclosed herein should not be regarded as restrictive for the invention, but merely as a basis for the claims and as a basis for rendering the invention implementable by the average skilled person.

Furthermore, the various terms used in the description should not be interpreted as restrictive but rather as a comprehensive explanation of the invention.

The word "a" used herein means one or more than one, unless specified otherwise. The phrase "a plurality of means two or more than two. The words "comprising" and "having" are constitute open language and do not exclude the presence of more elements.

Reference figures in the claims should not be interpreted as restrictive of the invention. Particular embodiments need not achieve all objects described.

The mere fact that certain technical measures are specified in different dependent claims still allows the possibility that a combination of these technical measures may advantageously be applied.

Further, this document describes the following clauses of the present invention:
1. A roll container comprising a first panel, a second panel arranged substantially parallel to the first panel, and a modular guide system, the modular guide system comprising:
   - a first guide assembly comprising a first guiding element and a second guiding element, the first guiding element and the second guiding element being mounted to the first panel of the roll container,
   - a second guide assembly comprising a third guiding element and a fourth guiding element, the third guiding element and the fourth guiding element being configured to be mounted to the second panel of the roll container,
   whereby each of the first, second, third and fourth guiding element comprises:
   - a cavity for receiving an end portion of a mounting bar, the cavity having an opening that is configured to enable the end portion to enter the cavity and is configured to guide the end portion to a secured position in the cavity, and
   whereby the first, second, third and fourth guiding elements are made from plastic.
2. The roll container according to clause 1, whereby the opening of the cavity of each of the guiding elements comprises a first portion enabling the end portion of the mounting bar to enter the cavity and a second portion to guide the end portion to the secured position.
3. The roll container according to clause 2, whereby the first portion of the opening of the first guiding element is configured to face the first portion of the opening of the second guiding element.
4. The roll container according to clause 2 or 3, whereby the first portion of the opening of the third guiding element is configured to face the first portion of the opening of the fourth guiding element.
5. The roll container according to any of the clauses 2 to 4, wherein the second portion of the opening of the first guiding element is configured to face the second portion of the opening of the third guiding element, and wherein the second portion of the opening of the second guiding element is configured to face the second portion of the opening of the fourth guiding element.
6. The roll container according to any of the preceding clauses,
   whereby the first, second, third and fourth guiding elements are configured and arranged to secure the mounting bar in a first position, thereby arranging a first end portion of the mounting bar in the secured position in the cavity of the first guiding element and a second end portion of the mounting bar in the secured position in the cavity of the third guiding element, and
   whereby the first, second, third and fourth guiding elements are configured and arranged to secure the mounting bar in a second position, thereby arranging the first end portion of the mounting bar in the secured position in the cavity of the second guiding element and the second end portion of the mounting bar in the secured position in the cavity of the fourth guiding element.
7. The roll container according to clause 6, wherein the first guide assembly further comprises a first guiding member, the first guiding member being configured to guide or support the mounting bar when the mounting bar is transferred from the first position to the second position or vice versa.
8. The roll container according to clause 7, wherein the second guide assembly further comprises a second guiding member, the second guiding member being configured to guide or support the mounting bar when the mounting bar is transferred from the first position to the second position, or vice versa.
9. The roll container according to clause 7 or 8, wherein the first guiding member comprises a rod.
10. The roll container according to clause 9, wherein each of the first and second guiding elements comprises an aperture for receiving an end portion of the rod.
11. The roll container according to clause 9 or clause 10, wherein the first guiding member comprises a further rod, arranged, during use, above the rod.
12. The roll container according to clause 8, wherein the first guiding member comprises a flexible member such as a rubber band.
13. The roll container according to clause 8, wherein the second guiding member comprises a rod.
14. The roll container according to clause 13, wherein each of the third and fourth guiding elements comprises an aperture for receiving an end portion of the rod.
15. The roll container according to clause 13 or clause 14, wherein the second guiding member comprises a further rod, arranged, during use, above the rod.
16. The roll container according to clause 13, wherein the second guiding member comprises a flexible member such as a rubber band.
17. The roll container according to any of the clauses 1-16, wherein the first, second, third and fourth guiding elements are made by injection moulding or 3D printing.
18. The roll container according to any of the clauses 1-17, wherein the first, second, third and fourth guiding element are arranged, during use, in a substantially horizontal plane.
19. The roll container according to any of the clauses 1-18, wherein the first and second guiding elements each comprise a slot for mounting the guiding elements to the first panel, and wherein the third and fourth guiding elements each comprise a slot for mounting the guiding elements to the second panel.
20. The roll container according to any of the clauses 1-19, further comprising a base plate, whereby the first and second panel are mounted at opposite side edges of the base plate.
21. A roll container comprising a first beam, a body and a connector for connecting the first beam and the body to each other, wherein the connector comprises:
   - a first portion, and
   - a second portion;
   wherein the first portion and the second portion together form
   - a first enclosure for enclosing a lateral surface of the first beam, and
   - a second enclosure for at least partly enclosing the body;
   wherein the first enclosure and the second enclosure are spaced apart from each other.
22. Roll container according to clause 21, wherein the first portion having a first contact area and the second portion having a second contact area are moveable relative to each other between a closed state and an open state,
   wherein, in the open state, the first contact area and the second contact area are at a distance from each other to provide a passage for the first beam to enter the first enclosure, and
   wherein, in the closed state, the first contact area and the second contact area are in contact with each other to close the passage.
23. Roll container according to any of the clauses 21-22, wherein the body is connected to a second beam of the roll container.
24. Roll container according to clauses 21-23 wherein the second enclosure is adapted to provide a second passage for the body to enter the second enclosure, wherein the body is removable from the second enclosure via the second passage in the closed state.
25. Roll container according to clauses 21-22, wherein the body is a third beam of the roll container, wherein the second enclosure encloses a second lateral surface of the body.
26. Roll container according to any of the clauses 21-25, wherein the body is parallel to the first beam.
27. Roll container according to any of the clauses 21-26, wherein the connector further comprises an aperture to connect the connector to the first beam of the roll container, preferably by a bolt.
28. Roll container according to any of the clauses 21-27, wherein the first portion and the second portion are connectable.
29. Roll container according to any of the clauses 21-28, wherein the first portion and the second portion are a single-body construction, wherein a hinge is provided to connect the first portion and the second portion together.
30. Roll container according to any of the clauses 21-29, wherein the connector is made from a plastic material, preferably ABS.
31. Roll container according to any of the clauses 21-30, wherein the first beam is part of a first panel of the roll container.
32. Roll container according to clause 31, wherein the body is connected to a second panel of the roll container.
33. Roll container according to clause 32, wherein the connector forms a hinge for rotating the first panel relative to the second panel.
34. A roll container, which is adapted to be converted from a first configuration to a second configuration, the roll container comprising a shelf, a first panel and a frame, wherein the shelf is connected to the frame, and
   wherein in the first configuration,
   - the shelf is adapted to be mounted horizontally, perpendicular to the frame, and
   wherein the shelf is adapted to be pivoted from the first configuration to the second configuration, wherein in the second configuration,
   - the shelf is in a vertical position and parallel to the frame, and
   - the shelf is adapted to be pivoted together with the frame relative to the first panel.
35. Roll container according to clause 34, wherein the roll container further comprises a mountable bar, which is vertically connected by a connecting member in the first configuration, and
   wherein the mountable bar is adapted to hang up clothing or other products in the second configuration.
36. Roll container according to clauses 34-35, wherein the roll container further comprises a top frame, wherein the top frame is connected to the top of the first panel, wherein the top frame is adapted to be pivoted from a low position to a high position.
37. Roll container according to any of the preceding clauses 35-36, wherein the top frame is in the high position and the mountable bar is mounted horizontally inside the roll container.
38. Roll container according to any of the preceding clauses 34-37, wherein the roll container further comprises at least one connector for connecting a first beam of the shelve and the frame to each other, wherein the at least one connector comprises
   - a first portion, and
   - a second portion;
   wherein the first portion and the second portion together form
   - a first enclosure for enclosing a lateral surface of the frame, and
   - a second enclosure for at least partly enclosing the first beam;
   wherein the first enclosure and the second enclosure are spaced apart from each other.
39. Roll container according to clause 38, wherein the second enclosure comprises a recess to hinge the first beam, when the roll container is converted from the first configuration to the second configuration.
40. Roll container according to clauses 38-39, wherein the first portion having a first contact area and the second portion having a second contact area are moveable relative to each other between a closed state and an open state,
   wherein, in the open state, the first contact area and the second contact area are at a distance from each other to provide a passage for the lateral surface of the frame to enter the first enclosure,
   wherein, in the closed state, the first contact area and the second contact area are in contact with each other to close the passage.
41. Roll container according to any of the preceding clauses 38-40, wherein the second enclosure is adapted to provide a second passage for the first beam to enclose a second lateral surface of the first beam.
42. Roll container according to any of the preceding clauses 38-41, wherein the connector further comprises an aperture to connect the at least one connector to the frame of the roll container, preferably by a bolt.
43. Roll container according to any of the preceding clauses 38-42, wherein the first portion and the second portion are connectable.
44. Roll container according to any of the preceding clauses 38-43, wherein the first portion and the second portion are a single-body construction, wherein a hinge is provided to connect the first portion and the second portion together.
45. Roll container according to any of the preceding clauses 38-44, wherein the at least one connector is made from a plastic material, preferably ABS.
46. Roll container according to any of the preceding clauses 34-45, wherein the shelf in the second configuration is adapted to be pivoted together with the frame around a vertical axis, wherein the frame is hinged to the panel.
47. Roll container according to any of the preceding clauses 34-46,
   wherein the shelf comprises at least two segments, wherein each segment comprises a first beam part, wherein each segment is adapted to be pivoted from a horizontal position, wherein the first beam part is connected to the frame, to a vertical position, wherein the segment is
   - parallel to the frame, and
   - adapted to be pivoted together with the frame.

## Claims

1. A roll container (200) comprising:
a panel (201);
a top frame (9); and
a connector (600) for rotatably connecting the top frame (9) to the panel (201),
wherein the connector (600) is adapted to allow rotation of the top frame (9) between a first rotational position (601) and a second rotational position (602),
wherein the top frame (9) extends further in a vertical direction in the second rotational position (602) than in the first rotational position (601),
wherein the connector (600) is mounted to the panel (201),
wherein the connector (600) optionally comprises a plastic material.

2. Roll container (200) according to claim 1, wherein the top frame (9) comprises a top portion (606) and a side portion (605),
wherein the connector (600) is adapted to allow rotation of the top frame (9) about a rotation axis (604) perpendicular to the panel (201),
wherein the side portion (605) extends in a longitudinal direction parallel to the panel (201) and holds the top portion (606) at an offset from the rotation axis (604),
wherein the top portion (606) extends in a longitudinal direction perpendicular to the panel (201),
wherein the side portion (605) is connected to the connector (600),
wherein the top portion (606) is at a higher vertical position in the second rotational position (602) than in the first rotational position (601).

3. Roll container (200) according to claim 1 or 2,
wherein the connector (600) comprises a groove (610) having a first notch (611) and a second notch (612),
wherein the first notch (611) and the second notch (612) extend at least partly in a vertical direction downward,
wherein the first notch (611) is arranged to fixate the top frame (9) in the first rotational position (601), and
wherein the second notch (612) is arranged to fixate the top frame (9) in the second rotational position (602)

4. Roll container (200) according to claim 3, wherein the groove (610) is formed in the plastic material.

5. Roll container (200) according to claim 3 or 4, wherein the side portion (605) of the top frame (9) comprises a first protrusion (621),
wherein the groove (610) is adapted to cooperate with the first protrusion (621) to guide the top frame (9) between the first rotational position (601) and the second rotational position (602).

6. Roll container (200) according to claim 5, wherein the side portion (605) comprises a second protrusion (622) arranged at an offset from first protrusion (621) along the longitudinal direction of the side portion (605),
wherein the connector (600) comprises a second groove adapted to cooperate with the second protrusion (622) to guide the top frame (9) between the first rotational position (601) and the second rotational position (602).

7. Roll container (200) according to any one of claims 3-6, wherein the groove (610) has a third notch (613) extending at least partly vertically downward,
wherein the third notch (613) is arranged to fixate the top frame (9) in a third rotational position (603),
wherein the second rotational position (602) is between the first rotational position (601) and the third rotational position (603).

8. Roll container (200) according to claim 7, wherein the groove (610) has a first groove portion (671) from the first notch (611) to the second notch (612), and a second groove portion (672) from the second notch (612) to the third notch (613),
wherein the first groove portion (671) is arranged to guide the first protrusion (621) over a first vertical displacement (631),
wherein the second groove portion (672) is arranged to guide the first protrusion (621) over a second vertical displacement (632) that is smaller than the first vertical displacement (631).

9. Roll container (200) according to claim 8, wherein the first groove portion (671) is curved with a first radius (641), wherein the second groove portion (672) is curved with a second radius (642), wherein the first radius (641) is smaller than the second radius (642).

10. Roll container (200) according to any one of claims 1-6, wherein the connector (600) is adapted to allow rotation of the top frame (9) to a third rotational position (603), wherein the second rotational position (602) is between the first rotational position (601) and the third rotational position (603).

11. Roll container (200) according to any one of claims 7-10, comprising a base plate and a back panel (203),
wherein the panel (201) and the back panel (203) extend vertically from the base plate,
wherein the panel (201) and the back panel (203) are arranged perpendicular to each other,
wherein, in the first 203position (601), the top portion (606) of the top frame (9) is closest to the back panel (203),
wherein, in the third rotational position (603), the top portion (606) of the top frame (9) is closest to a front edge of the base plate opposite to the back panel (203),
wherein, in the second rotational position (602), the top portion (606) of the top frame (9) is above the base plate between the front edge and the back panel (203).

12. Roll container (200) according to any one of the preceding claims, comprising a handle connected to the top frame (9) for rotating the top frame (9).

13. Roll container (200) according to any one of the preceding claims, wherein the connector (600) comprises an aperture (650) to receive a bolt to mount the connector (600) to the panel (201).

14. Roll container (200) according to any one of the preceding claims, wherein the connector (600) comprises a first body (661) and a second body (662),
wherein the first body (661) and the second body (662) are adapted to cooperate with each other to mount the connector (600) to the panel (201),
wherein the first body (661) and the second body (662) are arranged on opposite sides of the panel (201),
wherein the first body (661) and the second body (662) are connected to each other through an opening in the panel (201).

15. Roll container (200) according to any one of the preceding claims, comprising a further connector (600) and a further panel (202),
wherein the further panel (202) is arranged parallel and at an offset of the panel (201),
wherein the top frame (9) comprises a further side portion that is arranged parallel to the side portion (605) at an opposite side of the top portion (606),
wherein the further connector (600) is connected to the further side portion.
